# EUROPÄISCHE PATENTSCHRIFT

(11) **EP 1 709 857 B1**
(45) Veröffentlichungstag und Bekanntmachung des Hinweises auf die Patenterteilung: **09.06.2010**
(21) Anmeldenummer: 06112090.3
(22) Anmeldetag: 31.03.2006
(51) Int. Cl.: A01D 34/86

(54) **Randstreifen-Mähgerät**
Mowing maching for cutting verges
Faucheuse pour accotements

(30) Priorität: 05.04.2005 DE 102005015616
(43) Veröffentlichungstag der Anmeldung: 11.10.2006
(73) Patentinhaber: MULAG Fahrzeugwerk Heinz Wössner GmbH & Co. KG, 77728 Oppenau (DE)
(72) Erfinder: Spinner, Herbert, 77728, Oppenau (DE)
(74) Vertreter: Vogeser, Werner

(56) Entgegenhaltungen:
- DE-A1- 3 108 614
- DE-A1- 10 321 683
- DE-U- 6 806 563
- US-A- 3 665 685

## Beschreibung

### I. Anwendungsgebiet

Die Erfindung betrifft einen Pfosten-Freimäher mit mindestens zwei Mähvorrichtungen sowie ein Randstreifen-Mähgerät, welches außer wenigstens einem normalen Mähkopf einen Pfosten-Freimäher umfasst.

### II. Technischer Hintergrund

Unter einem Pfosten-Freimäher wird ein Mähgerät verstanden, welches bei Mähen in Fahrtrichtung auch dabei mehr oder weniger häufig, insbesondere regelmäßig auftauchende Hindernisse, z. B. im Randbereich aufgestellte Straßen-Leitpfosten, selbsttätig und bis unmittelbar an das Hindernis heran, möglichst allseitig, freimäht.

Ein solcher Pfosten-Freimäher ist prinzipiell aus der Patentanmeldung DE 101 22 407 A1 bereits bekannt.

Dabei wird ein in der Aufsicht konkav nach vorne offen gekrümmter, horizontal vom Arbeitsfahrzeug nach außen ragender Tragarm, der an seinem vordersten freien Ende ein um eine vertikale Achse rotierendes Messer oder einen Mähfaden trägt, so geführt, dass der Tragarm zwar von hinten an das Hindernis herangeführt wird, aufgrund der Krümmung die Mähvorrichtung jedoch zunächst den Bereich außen und vor dem Hindernis und danach durch Umlaufen des Hindernisses auf der Rückseite den Restbereich freimäht.

Da die Mähvorrichtung auf diese Art und Weise für ein vollständiges Freimähen 360 Grad des Umfanges des Hindernisses umlaufen muss, und dies aus Gründen der Funktionssicherheit nur mit einer bestimmten maximalen Umlaufgeschwindigkeit geschehen darf, ist hierdurch - sofern das Fortschreiten des Arbeitsfahrzeuges in Fahrtrichtung mit konstanter Geschwindigkeit erfolgen soll - diese konstante Arbeitsgeschwindigkeit sehr begrenzt.

Dies wirkt sich insbesondere dann nachteilig aus, wenn der Pfosten-Freimäher als eine Einheit innerhalb eines Randstreifen-Mähgerätes an einem Arbeitsfahrzeug montiert ist, welches den gesamten Randstreifen neben einer Straße, also sowohl innerhalb als auch außerhalb der z. B. Straßenleitpfosten liegend, mit möglichst großer Effizienz, also Fahrgeschwindigkeit, freimähen soll. Wenn dabei zusätzlich dieses Fahrzeug mit nur einem Bediener besetzt sein soll, der alle notwendigen Steuerungen für das Mähgerät bedienen soll, müssen diese möglichst stark miteinander verkoppelt sein, vor allem wenn es außer dem Pfosten-Freimäher noch zwei andere Mähköpfe umfasst.

Darüber hinaus sind bereits Pfosten-Freimäher mit zwei oder drei Mähvorrichtungen bekannt aus DE 10312683, wobei die einzelnen Mähvorrichtungen jeweils nur einen Teil des Umfanges um das Hindernis herum freimähen, indem die Arme der Mähvorrichtungen das Hindernis teilweise zangenartig umschließen und anschließend umlaufen, so dass jede Mähvorrichtung nur einen Teil des Umfanges um das Hindernis herum freimähen muss und dadurch das Freimähen in geringerer Zeit erfolgen kann, wodurch beim Entlangfahren z. B. einer Pfostenreihe eine größere Fahrgeschwindigkeit erzielbar ist.

Dabei haben sich bestimmte Praxissituationen als besonders schwierig zu beherrschen herausgestellt:
- wenn das Hindernis selbst als Steuerkurve benutzt wird, um durch den dem Freimäher entgegengesetzten Widerstand dessen bewegliche Komponenten auszulenken, nimmt der Druck gegen diese Hindernisse mit zunehmender Fahrgeschwindigkeit zu, so dass es zu einer Lockerung oder Beschädigung des Hindernisses, beispielsweise eines Leitpfostens, kommen kann;
- bei dem typischen Anwendungsfall des Freimähens der vertikalen Pfosten einer Leitplanke befindet sich die unterste Leitplanke häufig nur 15 cm über dem Boden, so dass die unter der Leitplanke durchgreifenden Teile des Pfosten-Freimähers diese Höhe nicht überschreiten dürfen; und
- gerade bei Leitplanken sind - wiederum aus Sicherheitsgründen - die Leitplanken im Abstand vor den sie tragenden vertikalen Pfosten befestigt, so dass trotz der niedrigen zur Verfügung stehenden Bauhöhe für den Freimäher dessen Auskragung zur Seite hin relativ groß, also mindestens 70 cm bis 1 m sein muss.

### III. Darstellung der Erfindung

### a) Technische Aufgabe

Es ist daher die Aufgabe gemäß der Erfindung, einen Pfosten-Freimäher bzw. ein Randstreifenmähgerät, welches einen solchen Freimäher umfasst, sowie ein Verfahren zum Freimähen zu schaffen, welches trotz hoher Arbeitsgeschwindigkeit eine zuverlässige Funktion auch des Pfosten-Freimähers gewährleistet.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Durch das Ansteuern und Verschwenken der beiden Tragarme, die die Mähvorrichtungen tragen, unabhängig voneinander mittels der entsprechenden Schwenkvorrichtungen, können die Mähvorrichtungen separat gesteuert und bewegt werden, und damit festgelegt werden, z. B. welcher Anpressdruck zu welcher Zeit und von welcher Richtung gegen das Hindernis aufgebracht wird, ob überhaupt ein ständiger Kontakt der Mähvorrichtung mit dem Hindernis während des Freimähens erfolgt oder z. B. eine der Mähvorrichtungen eine festgelegte Kontur, gegebenenfalls ohne Kontakt mit dem Hindernis, fährt, beispielsweise in Relation zu anderen Mähvorrichtungen oder in Relation zum Grundkörper des Freimähers.

Die Schwenkvorrichtungen umfassen dabei ein die Bewegung bewirkendes Stellelement, z. B. Kolben-Zylindereinheit, beispielsweise einen Pneumatikzylinder, der vorzugsweise in beide Richtungen beaufschlagbar ist, so dass sowohl eine Schwenkbewegung des Tragarmes auf das Hindernis zu als auch von diesem weg aktiv betrieben werden kann. Dadurch ist es möglich, auf mechanische Endanschläge für die Schwenkbewegungen der Tragarme - abgesehen von den möglichen Endstellungen des ihn betätigendem Kolbens in seinem aufnehmendem Zylinder - vollständig zu verzichten.

Zusätzlich kann bei einem Pneumatikzylinder die in einem der Arbeitsräume vorhandene Luft als Luftpolster mit einem vorher eingestellten Druck und damit als Feder benutzt werden, die die Vorspannung des Tragarmes in eine bestimmte Richtung vorgibt, also beispielsweise auch den Anlagedruck einer der Mähvorrichtungen oder deren Tastmittel gegen das Hindernis.

Dabei können auch die beiden Arbeitsräume beidseits des Kolbens im Pneumatikzylinder mit demselben Druck beaufschlagt werden, und dadurch der Arbeitskolben in der momentanen Ist-Stellung gehalten werden, mit einer Vorspannung gegen eine Auslenkung aus dieser Stellung, die analog dem in den Zylinder eingegebenen Luftdruck ist. Dabei kann dieser Arbeitsdruck für die Pneumatikzylinder der beiden Tragarme auch unterschiedlich sein, beispielsweise der Druck und damit die Vorspannung des weiter innen arbeitenden Tragarmes wesentlich höher eingestellt sein als die des weiter außen liegenden Tragarmes, vor allem wenn geplant ist, diese stärker vorgespannte, weiter innen laufende Mähvorrichtung an einem Hindernis knapp vorbeizusteuern, während die weiter außen laufende Mähvorrichtung durch das Hindernis kontaktiert und von diesem nach hinten weggedrückt werden soll.

Die Längsbewegung einer solchen Kolben-Zylinder-Einheit wird am einfachsten über Zahnstange und Ritzel in eine Schwenkbewegung der Tragarme um eine aufrechte Achse umgesetzt, wobei sowohl die Kolbenzylindereinheit als auch die Zahnstange vorzugsweise horizontal und vorzugsweise in Fahrtrichtung bzw. in einem möglichst wenig von der Fahrtrichtung abweichenden Winkel verlaufen.

Um eine gesteuerte Bewegung ausführen zu können, umfasst der Freimäher eine Steuerung, die Signale von dem Erfassungsmittel des Freimähers erhält und davon abhängig automatisch eine gesteuerte Schwenkbewegung von wenigstens einem oder vorzugsweise beiden Tragarmen mittels der entsprechenden Schwenkvorrichtungen vollzieht und dadurch das Hindernis freimäht.

Diese gesteuerte Schwenkbewegung kann entweder eine durch Programmieren festgelegte Bewegung sein, die immer gleich abläuft oder höchstens von der Geschwindigkeit des Arbeitsfahrzeuges in Fahrtrichtung abhängig ist, oder die Schwenkbewegung kann während ihres Ablaufs durch die von dem Erfassungsmittel weiterhin eingehenden Signale aktuell gesteuert werden. Das Erfassungsmittel kann ein konventioneller Taststab, der an wenigstens einer der Mähvorrichtungen, insbesondere der in normaler Mähstellung weiter vorn liegenden Mähvorrichtung, insbesondere der weiter innen fahrenden Mähvorrichtung, angeordnet ist und von dieser radial abstrebt, insbesondere über die radiale Auskragung der Schneidmitte der entsprechenden Mähvorrichtung hinaus.

Die Durchmesser der Mähvorrichtungen sind dabei vorzugsweise so dimensioniert, dass der radiale Überstand der Messer seitlich über die Breite der Tragarme hinaus mindestens einem Drittel, vorzugsweise der Hälfte, der erwarteten Dicke des Hindernisses entspricht.

Das Erfassungsmittel kann jedoch auch ein kontaktloses Erfassungsmittel sein, beispielsweise ein optisches Erfassungsmittel.

Vorzugsweise werden die beiden Mähvorrichtungen in Querrichtung einen Abstand zueinander zwischen sich lassen, der von dem Erfassungsmittel wenigstens teilweise, insbesondere vollständig abgedeckt wird, denn vorzugsweise wird das Trägerfahrzeug so gesteuert, dass das Hindernis in diese Lücke zwischen die beiden Mähvorrichtungen hinein gelangt. Wenn die beiden Mähvorrichtungen bereits einen Abstand entsprechend oder annähernd der Dicke des Hindernisses aufweisen, ist nur noch ein geringer Verlagerungsweg der Tragarme notwendig, um diese soweit auseinander zu bewegen, dass die Mähvorrichtungen um das Hindernis herum greifen können. Die Beaufschlagung des Hindernisses durch Querkräfte aus den Mähvorrichtungen oder deren Tastmittel bleibt damit gering.

Die Erfassungsmittel können entweder nur das prinzipielle Vorhandensein eines Hindernisses detektieren, wie dies beispielsweise bei einem radial auskragenden, gegenüber der Mähvorrichtung verschwenkbaren Taststab der Fall ist, welche lediglich durch Verschwenken des Taststabes die Kontaktierung eines Hindernisses signalisiert, ohne dessen genaue Position relativ zum Taststab und die Dimension des Hindernisses zu detektieren.

Das Erfassungsmittel kann jedoch auch so ausgelegt sein, dass damit auch die Breite eines Hindernisses ermittelt werden kann, die ja für das Umgreifen und Ummähen des Hindernisses vor allem bei einer gesteuerten Bewegung der Tastarme von Bedeutung ist.

Da sich die Breite eines Hindernisses je nach Blickrichtung, also in Fahrtrichtung oder quer zur Fahrtrichtung etc., ändern kann, kann das Erfassungsmittel auch in der Lage sein, abhängig von seiner Wirkrichtung die sich ändernde Breite des Hindernisses zu ermitteln und/oder dessen genaue Position.

Ein solches kontaktierendes, also mechanisches Tastmittel kann eine Tastgabel mit V-förmig auseinander laufenden und zueinander beweglichen Tastarmen sein, die um das Hindernis herum konkav gekrümmt sind und ihre Tastköpfe an den vorderen, nach innen weisenden Enden aufweisen, wodurch beim Überschieben über das Hindernis in Querrichtung die maximale Dicke des Hindernisses, betrachtet in Wirkrichtung, ermittelt werden kann. Wenn als Tastelemente zwei parallel zueinander liegende, in ihrem Abstand sich verändernde und an das Hindernis anliegende Tastleisten benutzt werden, die gegen das Hindernis vorgespannt anliegen, wird selbst bei Drehen des Tastleisten-Paares um das Hindernis herum auf Grund der Vorwärtsbewegung des sie tragenden Arbeitsfahrzeuges die sich möglicherweise ändernde Dicke des Hindernisses ebenfalls ermittelt. Dann kann das Erfassungsmittel nicht nur zu Beginn der Erfassung des Hindernisses, sondern während der weiteren Erfassung Signale an die Steuerung abgeben, die anschließend bzw. unmittelbar die Steuerung der Schwenkbewegung des Tragarmes eingehen.

Indem die Tragarme nicht knickbar ausgebildet sind und insbesondere wenigstens einer der Tragarme, nämlich der näher am Arbeitsfahrzeug befindliche Tragarm, in der Aufsicht gerade ist, ergibt sich eine sehr einfache und kostengünstige Bauform der Tragarme. Ein Knick, vor allem im weiter außen liegenden Tragarm bezüglich des Trägerfahrzeuges, befindet sich dabei vorzugsweise in der hinteren Hälfte, insbesondere im hinteren Drittel der Länge des Tragarmes.

Zusätzlich ist auch eine Aufnahme des Antriebes, beispielsweise eines horizontal umlaufenden Riemenantriebes, für die Mähvorrichtungen im Inneren des hohlen Tragarmes möglich, der beispielsweise aus einem geschlossenem Kastenprofil oder zwei Halbschalenprofilen bestehen kann. Das Profil besitzt dabei vorzugsweise einen flachliegenden Querschnitt, um die Bauhöhe des Tragarmes und der gesamten einzelnen Mähvorrichtung so gering wie möglich zu halten, um dadurch auch unter niedrigen Leitplanken hindurchgreifen zu können.

Bei den in der Aufsicht gekrümmten Tragarmen sind aus diesem Grund statt fortlaufend gekrümmten besser geknickte Tragarme vorzuziehen, da hierbei die Führung und Umlenkung von Antriebsriemen darin leichter lösbar ist.

Die Tragarme können mit ihrem hinteren, von der Mähvorrichtung abgewandten, Ende am Grundkörper entweder um eine gemeinsame Schwenkachse oder um getrennte Schwenkachsen verschwenkbar sein.

Die bisher bekannte Verschwenkbarkeit um eine gemeinsame Schwenkachse vereinfacht die Konstruktion, indem auf diese Schwenkachse auch der gemeinsame Antriebsmotor aufgesetzt werden kann, und indem sich auch die Antriebsritzel für den Antrieb der beiden Mähvorrichtungen auf ebenfalls dieser Schwenkachse befinden.

Vorzugsweise wird dennoch die Schwenkbarkeit um getrennte Schwenkachsen bevorzugt, da dann keine Notwendigkeit besteht, die beiden Tragarme in der Höhe übereinander anzuordnen, und dadurch die gesamte Vorrichtung niedriger bauend ausgeführt werden kann. Der Antrieb beider Mähvorrichtungen über einen gemeinsamen Antriebsmotor kann dennoch realisiert werden, indem beispielsweise von einem Ritzel zwischen den beiden Schwenkachsen, die vorzugsweise in Fahrtrichtung hintereinander angeordnet werden, Antriebsritzel auf den beiden Schwenkachsen gleichzeitig angetrieben werden, und über dem verbindenden Ritzel der Antriebsmotor sitzt.

Sofern von den beiden Mähvorrichtungen die weiter außen arbeitende Mähvorrichtung weiter vorne positioniert ist als die innen laufende, kann sichergestellt werden, dass die vom Trägerfahrzeug abgewandte Außenseite des Hindernisses zuverlässig freigemäht wird. Ein Wegschwenken dieser äußeren Mähvorrichtung nach hinten und anschließendes Freimähen der in Fahrtrichtung betrachteten Rückseite des Hindernisses wird dann aktiv durch die Schwenkvorrichtung und gesteuert vollzogen, beispielsweise ausgelöst von einem Erfassungsmittel, welches erst an der weiter innen und weiter hinten laufenden anderen Mähvorrichtung angeordnet ist, wodurch die Schwenkbewegung der äußeren Mähvorrichtung erst einsetzt, wenn diese das Hindernis auf der Außenseite zumindest teilweise, vorzugsweise komplett, passiert hat.

Zusätzlich kann die Schwenkachse einer der Mähvorrichtungen, insbesondere die des weiter außen liegenden Tragarmes, entweder relativ zum Grundkörper verlagerbar sein, insbesondere in Querrichtung und/oder durch Verschwenken des ganzen Grundkörpers um eine senkrechte Achse am Auslegerarm insbesondere gesteuert in Abhängigkeit von der Schwenkbewegung dieses Tragarmes oder eines anderen Signals. In der normalen Mähstellung wird der weiter innen liegende Tragarm dagegen annähernd nach vorne, nur etwas nach schräg außen, weisen mit einem einstellbaren Differenzwinkel, der zwischen 0° und 30° betragen kann, abweichend von der Fahrtrichtung.

Neben der normalen Mähstellung, in der die Tragarme in etwa V-förmig auseinander strebend oder etwa parallel zueinander verlaufen, und der davon abweichenden Schwenkstellung beim Freimähen um das Hindernis herum können die beiden Tragarme auch eine so genannte Transportstellung einnehmen, in der sie relativ zu den sie tragenden Grundkörper entweder nach vorne oder hinten weisend möglichst eng aneinander geklappt sind oder bei der der innere Tragarm nach vorne und der äußere nach hinten geklappt ist, damit in der Transportstellung der gesamte Pfosten-Freimäher eine möglichst geringe Breite in Querrichtung besitzt für den Transport am Arbeitfahrzeug zu einem anderen Einsatzort. Bei einem Trägerfahrzeug, welches einen von einer Frontschiene getragenen Frontmähkopf aufweist, ist der Pfosten-Freimäher dabei möglichst weit nach innen, innerhalb der Gesamtbreite des Trägerfahrzeuges, hereingefahren bzw. eingeklappt, und zwar vorzugsweise im Zwischenraum zwischen der Fahrzeugfrontschiene und dem weiter vorn liegenden Anlenkpunkt für den Auslegerarm des Hauptmähkopfes an der Fahrzeugfrontschiene.

Um auch neben dem Trägerfahrzeug abfallende oder ansteigende Böschungen zuverlässig freimähen zu können, soll eine Anpassung an diese Schrägstellung des Untergrundes möglich sein.

Zu diesem Zweck kann der Grundkörper um eine horizontale, vorzugsweise in Fahrtrichtung verlaufende oder zumindest Komponenten der Fahrtrichtung aufweisende, Kippachse verschwenkbar, insbesondere gesteuert verschwenkbar um z. B. +/- 30°, sein.

Zwecks Anpassung an dem Untergrund kann der Freimäher, insbesondere eine oder beide seiner Mähvorrichtungen, insbesondere die weiter außen laufende Mähvorrichtung, ein Detektionsmittel aufweisen, um den Verlauf des Untergrundes abzutasten und die Schrägstellung um die Kippachse und/oder die absolute Höhenlage des Freimähers anzupassen.

Um Kollisionen der Schneidmittel, insbesondere der Schneidmesser, der Mähvorrichtungen mit irgendwelchen Hindernissen, beispielsweise mit dem freizumähenden Hindernis, zu vermeiden, werden vorzugsweise die Schneidmesser wegklappbar am rotierenden Messerträger befestigt:
Durch die Fliehkraft nehmen die Messer die radial nach außen weisende Normalposition ein. Beim Anschlagen an ein Hindernis klappen sie jedoch um eine parallel zur Rotationsachse des Messergrundkörpers, aber von diesem radial versetzt weiter außen liegende, Klappachse nach hinten weg, wodurch Beschädigungen des Messers als auch des Hindernisses reduziert werden.

Auf eine ganz oder teilweise umlaufende Tastscheibe mit einem Radius entsprechend dem Flugkreis der Messer oder etwas größer, die ansonsten oberhalb der Schneidmesser angeordnet ist und solche Beschädigungen verhindert, kann dann eventuell verzichtet werden bzw. werden ergänzt durch die Einklappbarkeit der Messer bei Hindernissen, die niedriger sind als die Tastscheibe, beispielsweise aus dem Untergrund herausragende Steine.

Auf diese Art und Weise ist eine Vorgehensweise beim Freimähen möglich, bei der zunächst mit Hilfe des Erfassungsmittels das Ankommen des Hindernisses am Freimäher detektiert wird und von dieser Detektion gesteuert wenigstens eine der Mähvorrichtungen, insbesondere beide Mähvorrichtungen, eine programmgesteuerte und/oder signalgesteuerte Schwenkbewegung um unterschiedliche Umfangsbereiche des Hindernisses herum vollziehen. Insbesondere wird die weiter innen laufende Mähvorrichtung erst auf Grund der Detektion von vorne an das Hindernis herangeklappt.

Dadurch können die auf das Hindernis einwirkenden Anpresskräfte minimiert werden, insbesondere sogar ein Kontakt der Mähvorrichtungen am Hindernis vollständig vermieden werden und/oder eine gegenseitige wenigstens teilweise Kompensation der Anpresskräfte der Mähvorrichtung gegen das Hindernis erreicht werden.

Zur Erreichung dieses Effektes wird der Freimäher vorzugsweise mit seiner Lücke zwischen den beiden Mähvorrichtungen gegen das Hindernis geführt, die dadurch nicht oder nur noch geringfügig auseinander bewegt werden müssen, um das Hindernis zwischen sich aufzunehmen. Zusätzlich kann dabei der Arbeitsdruck in einer oder mehreren der Kammern des die Schwenkbewegung bewirkenden Fluidzylinders gesteuert verändert werden, beispielsweise in Abhängigkeit von der momentanen Schwenkstellung des jeweiligen Tragarmes und/oder der Parameter des detektierten Hindernisses, beispielsweise dessen Position, Größe oder ähnlichem.

Auch kann die Soll-Winkelstellung der beiden Tragarme zueinander in ihrer normalen Mähstellung einerseits und/oder während deren Schwenkbewegungen verändert werden in Abhängigkeit von der vom Erfassungsmittel ermittelten Position und/oder Dicke des Hindernisses. Auch die Lage der Schwenkachse einer oder beider der Tragarme am Grundkörper kann hiervon abhängig gesteuert verlagert, insbesondere in Querrichtung verlagert werden relativ zum Grundkörper.

Durch das Vorbeiführen der weiter innen laufenden Mähvorrichtung am Hindernis ohne Kontaktierung und anschließendes aktives Heranklappen von vorne an das Hindernis kann ferner erreicht werden, dass bei nicht vollständig gegeneinander kompensierten Anpresskräften der beiden Mähvorrichtungen die von vorn nach hinten mittels der vorderen Mähvorrichtung aufgebrachte Anpresskraft höher ist als die entgegen gerichtete Anpresskraft. Denn wenn die typischen Hindernisse beim Freimähen, nämlich die Straßen-Leitpfosten, schräg stehen, so stehen sie fast immer in Fahrtrichtung nach vorne schräg geneigt, bedingt durch Kontakt mit einem fahrenden Fahrzeug, den Winddruck, Schneedruck beim Schneeräumen oder Ähnlichem. Das Beaufschlagen dieser Leitpfosten entgegen der Fahrtrichtung führt daher häufig nur zu einem Wiederaufrichten oder zu einem leichten Schrägstellen nach hinten, was durch spätere Belastungen nach vorne dann wieder ausgeglichen werden kann.

### c) Ausführungsbeispiele

Ausführungsformen gemäß der Erfindung sind im Folgenden beispielhaft näher beschrieben. Es zeigen:
- Fig. 1 bis 3:: eine erste Ausführungsform des Freimähers in verschiedenen Funktionsstellungen,
- Fig. 4:: ein Randstreifen-Mähgerät in einer Seitenansicht,
- Fig. 5 bis 7:: eine zweite Ausführungsform des Freimähers in verschiedenen Funktionsstellungen,
- Fig. 8:: verschiedene Mähvorrichtungen in der Seitenansicht,
- Fig. 9:: eine dritte Bauform des Freimähers,
- Fig. 10:: das gesamte Mähgerät in verschiedenen Funktionsstellungen, und
- Fig. 11:: ein Detail der Mähvorrichtung.

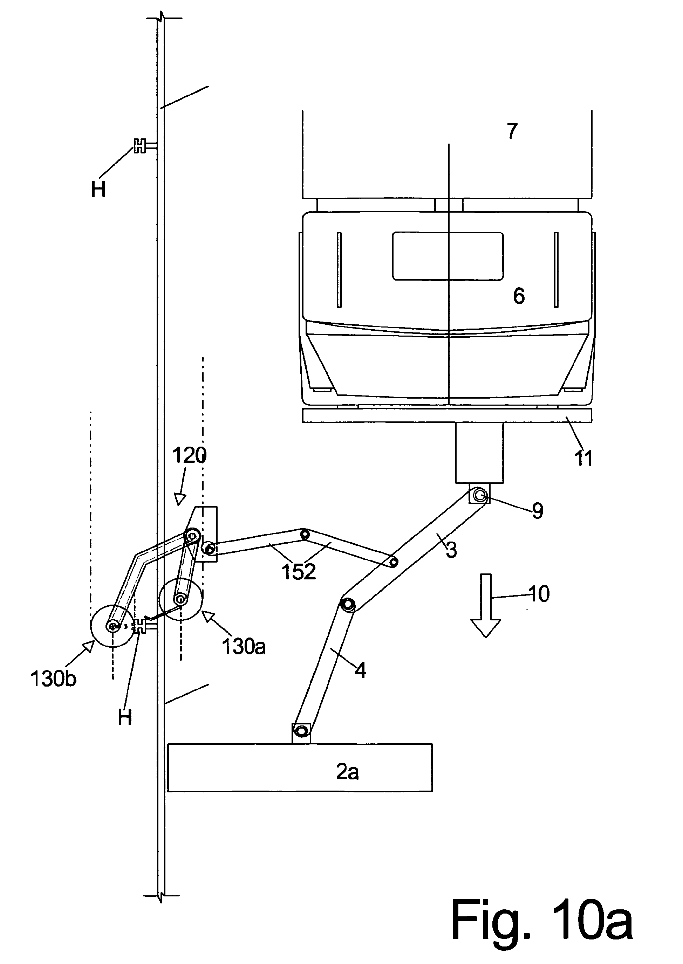

Die Figur 10a zeigt ein komplettes Randstreifen-Mähgerät 1, wie es zum Mähen des Bewuchses auf einem Randstreifen neben einer Straße 14 verwendet wird, wobei dort häufig Hindernisse H auch auf der vom Arbeitsfahrzeug 7, welches in der Regel auf der Straße 14 neben dem Randstreifen fährt, abgewandten Außenseite freigemäht werden sollen, beispielsweise Hindernisse H in Form des Stammes eines Alleebaumes, eines Leitpfostens 22 oder - was den schwierigsten Fall darstellt - des vertikalen Tragpfostens 17 einer Leitplanke 15, die im geringen Abstand über dem Untergrund durchgängigen Fahrtrichtung 10 verläuft und noch dazu über Abstandshalter 18 von der Rückseite der Leitplanke 15 nach außen versetzt ist.

Diese Aufgabe wird in der Regel bewältigt, in dem an der Front des Arbeitsfahrzeuges 7, also noch vor dessen Fahrerkabine 6, an einem Frontrahmen 8, ein Mähkopf 2a befestigt ist, der mittels eines mehrteiligen gelenkigen Auslegerarmes 3 vom Bediener vor dem Fahrzeug und seitlich zu diesem versetzt geführt wird, so dass der Grünstreifen unmittelbar anschließend an den äußeren Rand der Straße 14, z.B. bis hin zur Leitplanke 15, mäht.

Ebenfalls am Arbeitsfahrzeug 7 vorzugsweise an dem ersten Segment 3a des Auslegerarmes 3, ist der erfindungsgemäße Pfosten-Freimäher 120 befestigt, den seine beiden Mähvorrichtungen 127a, b hinter dem Mähkorb 2a, jedoch noch vor dem Arbeitsfahrzeug 7 und damit ebenfalls im Sichtbereich des Bedieners, der in der Fahrerkabine 6 meist auf dem Beifahrersitz sitzt, geführt wird. Und zwar wird er mit der in Fahrtrichtung 10 gesehenen Lücke L zwischen den Mähvorrichtungen 127a, b gegen das Hindernis H, 17, 22 geführt, also unter Umständen unter die Leitplanke 14 und darf damit nur eine entsprechend geringe Höhe aufweisen.

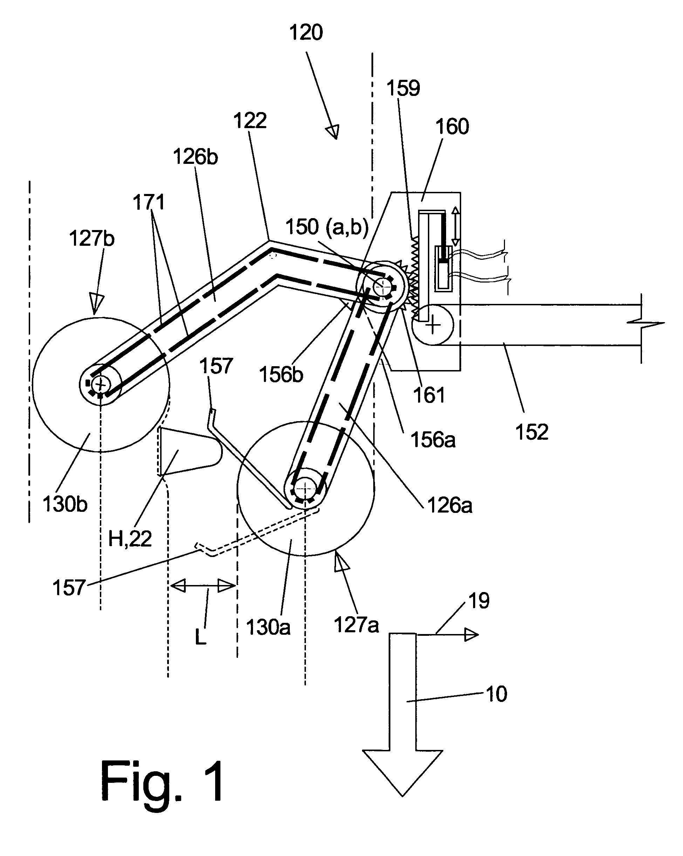

In den Figuren 1 bis 3 ist in einer ersten Ausführungsform der Pfosten-Freimäher 120 vergrößert dargestellt:
Am freien Ende des Auslegerarmes 152 befindet sich ein Grundkörper 160, von dem aus Tragarme 126a, b abragen, an deren freien Ende die Mähvorrichtungen 127a, b angeordnet sind, die jeweils ein z.B. in einer horizontalen Ebene rotierendes Schneidmittel 129 in Form eines Mähfadens, Schneidmessers etc. aufweisen.

Unmittelbar oberhalb dieser Schneidmittel 129 ist eine Tastscheibe 130a, b angeordnet, deren radiale Erstreckung geringfügig größer ist als die der Schneidmittel 129, um ein Beschädigen von Hindernissen wie Leitpfosten 22 durch die Schneidmittel 129 zu verhindern.

Die Tragarme 126 sind schwenkbar um eine vertikal zum Grundkörper 160 stehende Achse 150 verschwenkbar, die bei der Ausführungsform gemäß Fig. 1 bis 3 zusammenfallen.

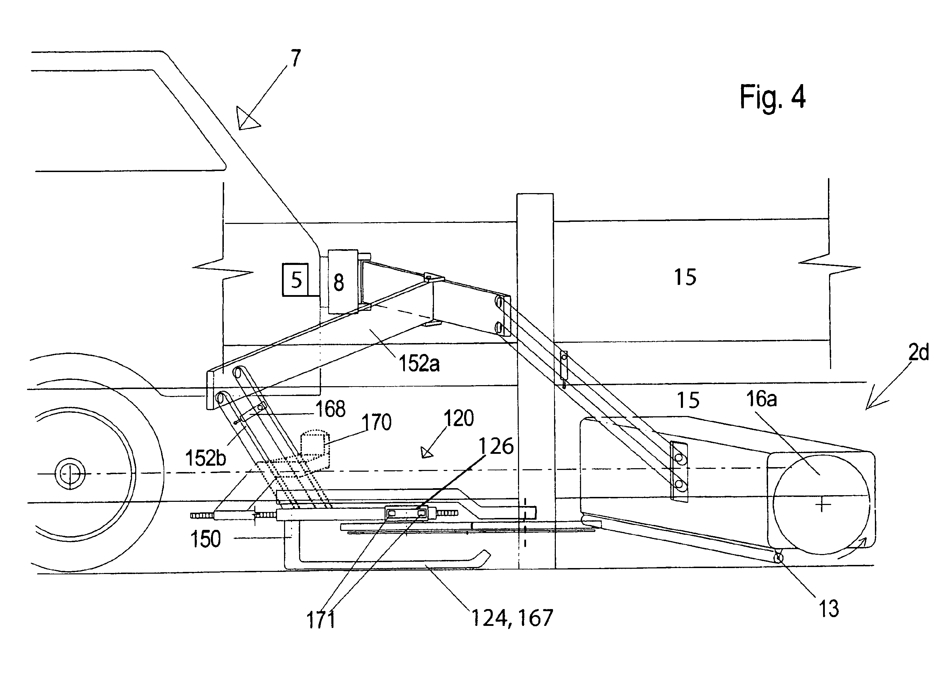

Die Tragarme 126 bestehen aus geschlossenen, flachliegenden Kastenprofilen, wie am besten in Fig. 4 im Querschnitt zu erkennen, in deren Inneren die beiden Trume eines umlaufend endlosen Keilriemens 171 geschützt untergebracht sind, welcher über zwei Keilriemenscheiben umläuft, die sich in den beiden Enden des Tragarmes 126 befinden, also am vorderen Ende über dem Zentrum der Mähvorrichtung 127, die unter dem Ende des Tragarms 126 angeordnet ist, und am hinteren Ende auf der Schwenkachse 150a bzw. 150b. Am hinteren Ende ist dieses Ritzel durch einen Antriebsmotor 170 angetrieben, der bei übereinstimmenden Schwenkachsen 150a, b über den Tragarmen 126a, b am Grundkörper 160 angeordnet ist und beide Mähvorrichtungen 127a, b gemeinsam antreibt.

Wie Fig. 1 zeigt, ragt der gerade verlaufende Tragarm 126a der näher am Arbeitsfahrzeug 7 arbeitenden, Mähvorrichtung 127a in der normalen Mähstellung schräg nach vorne mit einem Winkel von ca. 20° gegenüber der Fahrtrichtung 10 nach außen. Der andere Tragarm 126b ragt dagegen mehr quer nach außen, als unter einem größeren Winkel zur Fahrtrichtung 10 und ist in seinem Verlauf einmal gekröpft mit Öffnungswinkel der Kröpfung nach schräg vorne, wobei die beiden Teile die die Kröpfung bilden, jeweils gerade ausgebildet sind, um eine einfache Führung, des Keilriemens 171 im Inneren des gekröpften Tragarmes zu ermöglichen mit nur jeweils einer Umlenkstelle an der Stelle der Kröpfung.

Der Knick 122, der diese Kröpfung bildet, liegt im hinteren Viertel des Tragarms 127b, dessen Länge so bemessen ist, dass in der in Fig. 1 dargestellten normalen Mähstellung die Mitte der Mähvorrichtung 127b außerhalb und hinter der Mitte der Mähvorrichtung 127a liegt und die beiden Mähvorrichtungen in Fahrtrichtung 10 betrachtet vorzugsweise eine Lücke L zwischen sich belassen, dagegen in Querrichtung 19 betrachtet überlappen.

In dieser Mähstellung gemäß Fig. 1 wird der Pfosten-Freimäher 120 so gesteuert, dass ein ankommendes Hindernis H wie etwa ein Leitpfosten 22 auf die Lücke L trifft, was von dem Pfosten-Freimäher 120 detektiert wird mittels eines Taststabes 157, der in seiner gestrichelt eingezeichneten Ruhestellung verschwenkbar z.B. um die Mitte der innen laufenden Mähvorrichtung 127a quer nach außen ragt und radial über die Tastscheibe 130 so weit vorsteht, dass sie die Lücke L im wesentlichen überdeckt und von einem ankommenden Hindernis H nach hinten weggedrückt wird, wie in Fig. 1 dargestellt.

Der Pfosten-Freimäher 120 wird dabei im Detail so mit der Lücke L gegen das Hindernis H gesteuert, dass die das Hindernis H als erste erreichende, weiter innen laufende Mähvorrichtung 127a das Hindernis H zunächst nicht kontaktiert, sondern an diesem vorbeifährt, und das Hindernis H nur mittels des Taststabes 157 kontaktiert wird, welcher mit einer sehr geringen Kraft auslenkbar ist, wodurch die auf das Hindernis H, vor allem in der Richtung 19, einwirkenden Kräfte sehr gering sind.

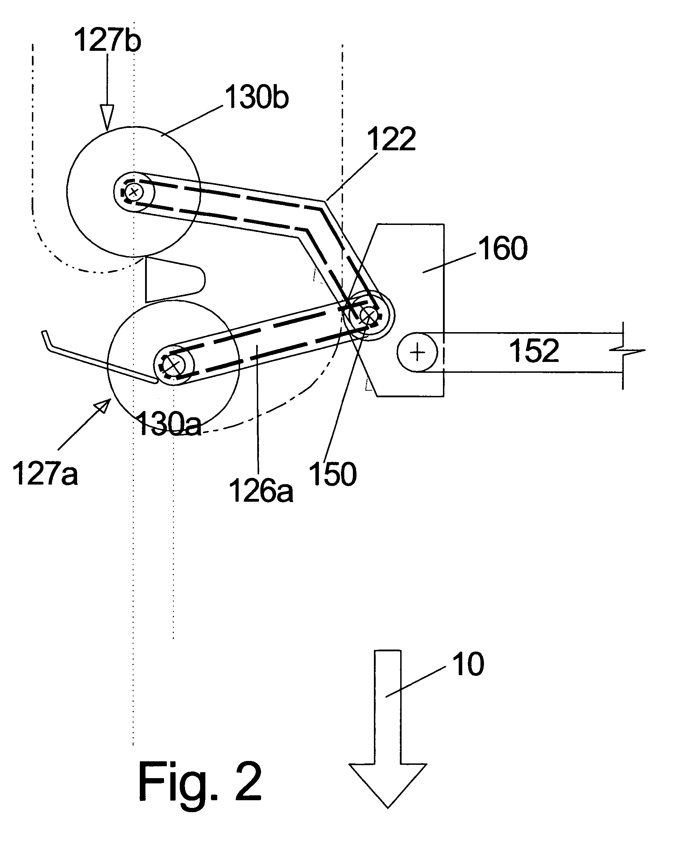

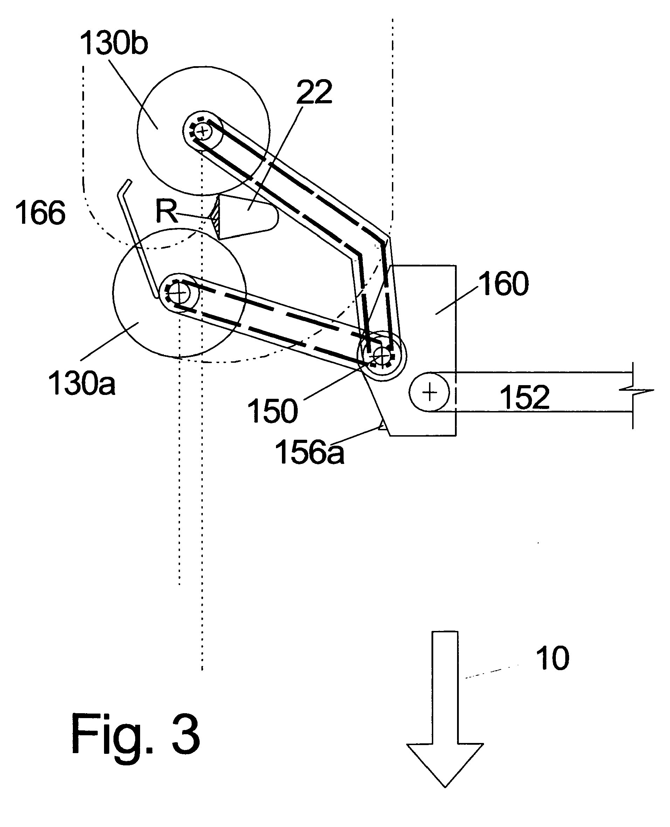

Erst bei einem solchen Auslenken des Taststabes 157, welches ein Erreichen zumindest der Mitte der innenlaufenden Mähvorrichtung 127a des Hindernisses H bzw. 22 signalisiert, bewirkt ein aktives Verschwenken des vorderen Tragarmes 126a nach außen, also bis die innere Mähvorrichtung 127a mit ihrer Tastscheibe 130a an der Innenseite bzw. an der Vorderseite des Hindernisses H bzw. 22 anliegt oder auch um eine aktiv gesteuerte Schwenkkurve und unter Weiterfahren des Freimähers 120 in Fahrtrichtung 10 an dieser entlang zunehmend nach außen gleitet, wie in den Figuren 2 und 3 dargestellt.

Diese Schwenkbewegung um die Achse 150a herum wird bewirkt mittels eines Ritzels 161 a, welches koaxial zur Achse 150a angeordnet und mit dem Arm 126a drehfest verbunden ist, und welches mit einer Zahnstage 159a kämmt, die z.B. in Fahrtrichtung 10 am Grundkörper 160 verschiebbar angeordnet ist und mittels eines parallel zur Zahnstange 159a montierten Pneumatikzylinders 162a betätigt wird.

Vorzugsweise ist der Pneumatikzylinder 162a ein in beide Richtungen beaufschlagbarer Zylinder, dessen Endstellungen die Schwenkbewegung des Armes 126 definiert.

Die weiter außen laufende, zweite Mähvorrichtung 127 b wird, von der Ausgangsstellung aus, den Schwenkarm 126b gegen das Hindernis 22 schwenken, bevor dieses die Mähvorrichtung 127b kontaktiert, beispielsweise ausgelöst ebenfalls durch das Signal des Taststabes 157, also vorzugsweise zeitgleich mit dem Heranschwenken der Mähvorrichtung 127a gegen die Vorderseite des Hindernisses. Das zeitgleiche Kontaktieren des Hindernisses durch beide Mähvorrichtungen 127a, b hat den Vorteil, dass gegen das Hindernis gerichtete Querkräfte der beiden Mähvorrichtungen kompensiert werden, und die relativ leichten und leicht verankerten Leitposten 22 nicht umgedrückt werden.

Dementsprechend sollte auch die Beendigung der Kontaktierung durch die beiden Mähvorrichtungen zeitgleich erfolgen, also mit Freikommen des Hindernisses H, 22 von der ersten der beiden Mähvorrichtungen 127a, b, beispielsweise der zweiten Mähvorrichtung 127b, auch die andere Mähvorrichtung z.B. 127a aktiv in ihre Ausgangsstellung zurückgeschwenkt werden und damit vorn Pfosten 22 abheben.

Zu diesem Zweck ist auch der zweite Tragarm 126b mittels einer eigenen Betätigungsvorrichtung, wie vorbeschrieben bestehend aus Ritzel 161, Zahnstange 159b und Pneumatikzylinder 162b, separat und unabhängig von der Schwenkbewegung des anderen Tragarms 126a ansteuerbar und verschwenkbar.

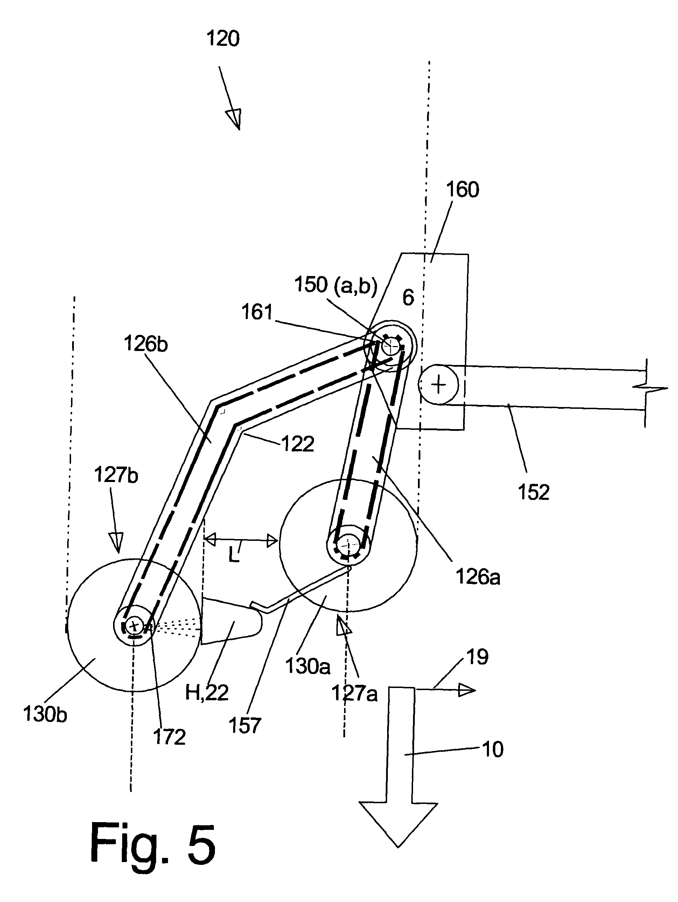

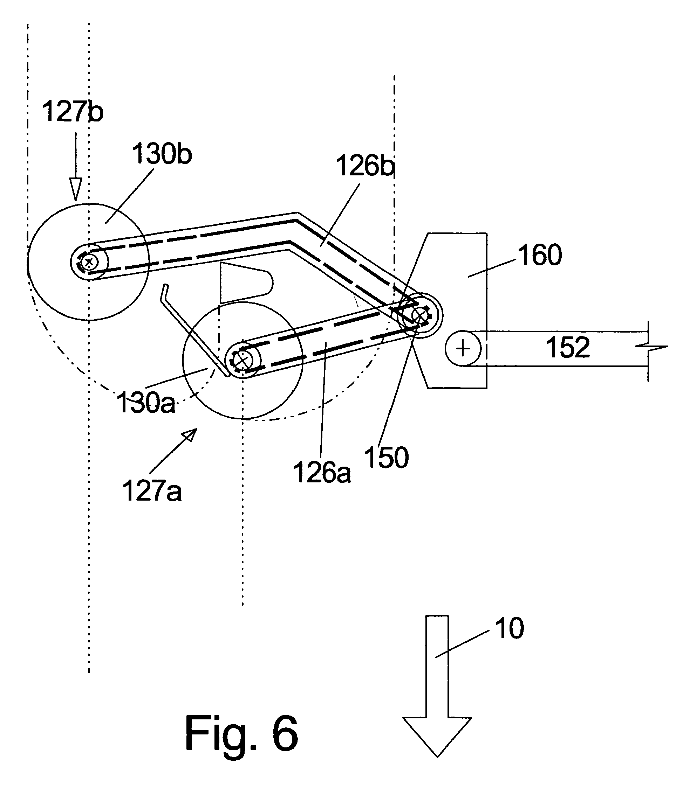

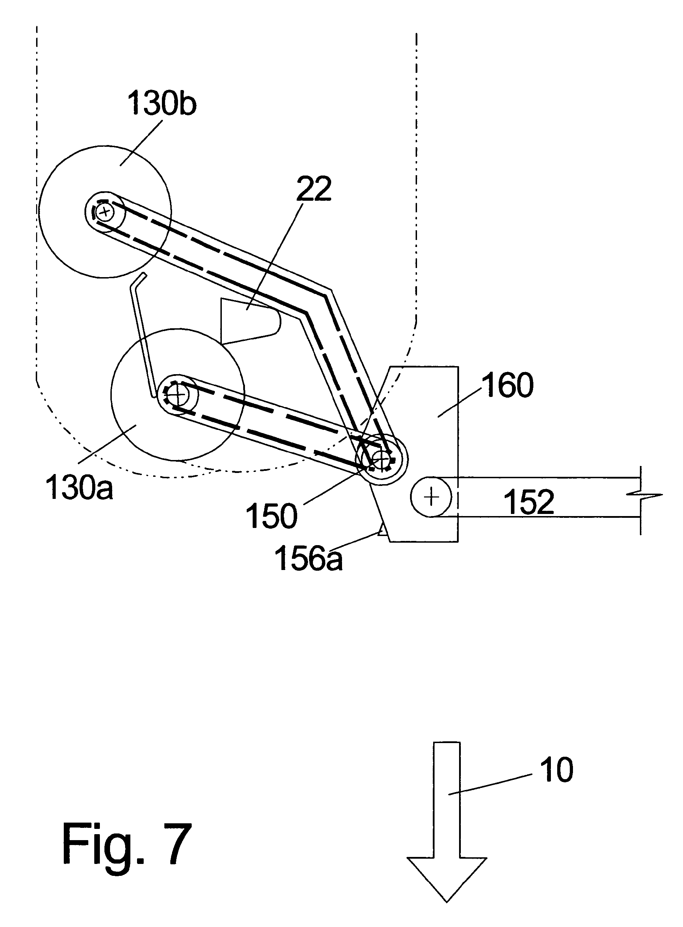

Die Figuren 5 bis 7 zeigen eine zweite Ausführungsform der Mähvorrichtung, die sich von der ersten gemäß den Figuren 1 bis 3 ersichtlich dadurch unterscheidet, dass der zweite Tragarm 126b um so viel länger ausgebildet ist, dass er sich in der normalen Mähstellung, der Ausgangsstellung, gemäß der Fig. 5 weiter nach vorn ragt, so dass sich in dieser Ausgangstellung die Mitte der zweiten, weiter außen arbeitenden Mähvorrichtung 127b nicht hinter, sondern vor der Mitte der innen arbeitenden Mähvorrichtung 127a befindet.

Auch hierbei ist vorzugsweise in Fahrtrichtung 10 betrachtet eine Lücke L zwischen den beiden Mähvorrichtungen vorhanden, die diesmal vorzugsweise so gegen das Hindernis H, 22 gesteuert wird, dass die weiter vorn liegende Mähvorrichtung 127b das Hindernis H passiert, ohne es zunächst zu berühren oder nur ohne Krafteinwirkung daran entlang schleift.

Auch hierbei wird das ankommende Hindernis H detektiert mittels eines Taststabes 157, ersatzweise auch mittels eines kontaktlosen Sensors 172, der beispielsweise an der weiter außen arbeitenden Mähvorrichtung 127a befestigt sein kann.

Die Lücke L sollte vorzugsweise so groß bemessen sein, dass erwartete Hindernisse wie etwa Leitpfosten 22 die Lücke passieren können, ohne dabei - wie bei Fig. 1 erwähnt - auch die innen liegende Mähvorrichtung 127a zunächst zu kontaktieren.
Erst nachdem die Mitte auch der innenliegenden Mähvorrichtung 127a das Hindernis passiert hat, wird diese wiederum aktiv gesteuert gegen die Vorderseite des Hindernisses geschwenkt. Der Knick 122, also die Kröpfung des anderen Tragarmes 126b sollte dabei vorzugsweise so bemessen und positioniert sein, dass bis dahin das Hindernis 22 auch noch nicht die Vorderseite dieses zweiten Tragarmes 126b kontaktiert hat.

Dadurch kann wiederum erreicht werden, dass erst durch aktives, vorzugsweise gleichzeitiges Verschwenken beider Tragarme 126a, b beide Mähvorrichtungen 127a, b gleichzeitig das Hindernis von gegeneinander gerichteten Seiten her kontaktieren.

Der Vorteil der Lösung der Fig. 5 ff. gegenüber derjenigen der Fig. 1 ff. liegt darin, dass die Außenseite des Hindernisses H, 22 zuverlässig und vollständig freigemäht wird und kein ungemähter, noch so kleiner ungemähter Rest R auf der Außenseite des Hindernisses 22 verbleibt, wie in Fig. 3 dargestellt.

Der Nachteil der Lösung gemäß Fig. 5 ff. besteht darin, dass die zweite Mähvorrichtung 127b noch die Rückseite des Hindernisses H, 22 freimäht, während dieses nicht mehr auf der Vorderseite von der ersten Mähvorrichtung 120a kontaktiert wird, und in der größeren Länge des zweiten Tragarmes 126b.

Der Rest der Vorrichtung ist übereinstimmend mit derjenigen der Fig. 1 ff., wobei die Schwenkantriebe der Tragarme aus Übersichtlichkeitsgründen nur in Fig. 1 dargestellt sind.

Die zusammenfallenden vertikalen Achsen 150a, b bieten einen einfachen konstruktiven Aufbau und einen Antrieb mittels nur eines darüber angeordneten Motors 170.

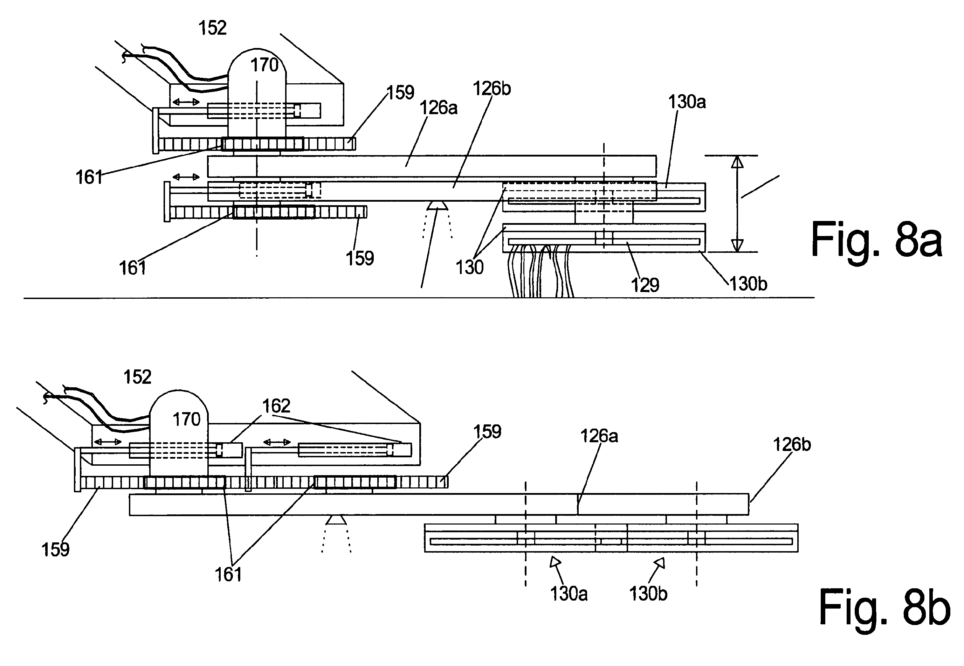

Die Figuren 4 und 8a zeigen jedoch auch das dadurch entstehende Problem der benötigten Bauhöhe der beiden übereinander liegenden Tragarme 126a, b, die sehr gering sein muss, um - siehe Fig. 4 - die Mähvorrichtung unter einer tiefliegenden Leitplanke 15 hindurchführen zu können.

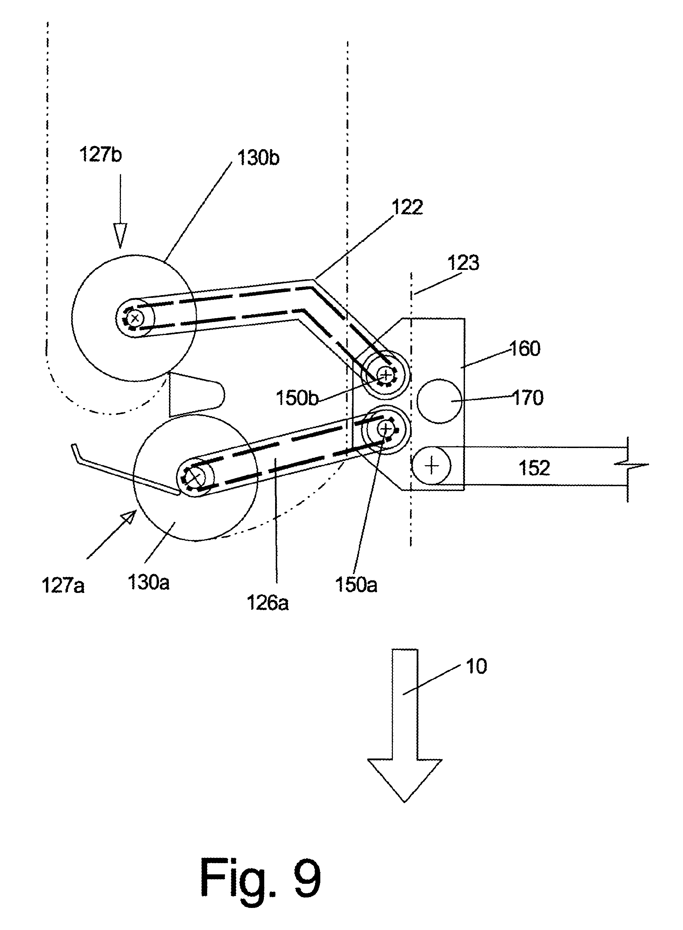

Um dies zu erreichen, kann es vorteilhaft sein, gemäß Fig. 8b und 9 die beiden Mähvorrichtungen 127a, b, also deren Tragarme 126a, b, um getrennte, beispielsweise in Fahrtrichtung 10 beabstandete Achsen 150a, b gegenüber dem Grundkörper 160 verschwenkbar zu lagern, was gemäß Fig. 8b dazu führt, dass sich die beiden Tragarme 126a, b auf gleicher Höhe befinden und dadurch die Gesamtbauhöhe der Mähvorrichtungen 127a, b geringer wird.

Weiterhin soll anhand der Figuren 9 und 10a auch klargestellt werden, dass die Tragarme 126a, b und damit die gesamten Mähvorrichtungen 127a, b keineswegs immer waagrecht liegen, wie zuvor immer aus Gründen der Einfachheit genannt und ebenso die Achsen 150 nicht immer vertikal stehen müssen, da in einer bevorzugten Ausführungsform die Mähvorrichtungen, insbesondere bereits der Grundkörper 160, relativ zum Ende des Auslegerarmes 152 um eine Kippachse 123, die in Fahrtrichtung verläuft oder zumindest Komponenten dieser Fahrtrichtung enthält, kippbar ist um ein neben der Fahrbahn 14 schräg abfallenden oder ansteigenden Grünstreifen mähen zu können.

Zu diesem Zweck liegt der Pfosten-Freimäher 120 mit einer Gleitkufe 167, die beispielsweise am Grundkörper 160 und/oder dem weiter außen liegenden Tragarm 126 angeordnet sein kann oder an beiden, auf dem Untergrund auf oder die Form des Untergrundes bzw. der momentane Abstand der Mähvorrichtungen zum Untergrund wird mittels kontaktloser Sensoren 124 abgetastet die mittels elektromagnetischer Wellen, also Mikrowellen, Ultraschallwellen oder Infrarotwellen arbeiten, abgetastet und davon abhängig die Höhenlage des Grundkörpers 160 über dem Untergrund bzw. der Mähvorrichtung gegenüber dem Untergrund und/oder die Schrägstellung und die Kippachse 123 gesteuert.

Um das Freimähen von Hindernissen zu optimieren, kann - vor allem bei getrennten vertikalen Achsen 125a, b - eine, vorzugsweise die Achse 125b des weiter außen arbeitenden Tragarmes 126b, in Querrichtung 19 verlagerbar sein, was insbesondere während des Ummähens des Hindernisses H erfolgen kann, beispielsweise indem die Achse 150b entlang des Grundkörpers 160 verlagerbar ist oder der Grundkörper 160 am freien Ende des Auslegearms 125 verschwenkbar ist, indem etwa der Schwenkpunkt des Grundkörpers 160 am Tragarm 152 mit der ersten vertikalen Achse 125a zusammenfällt.

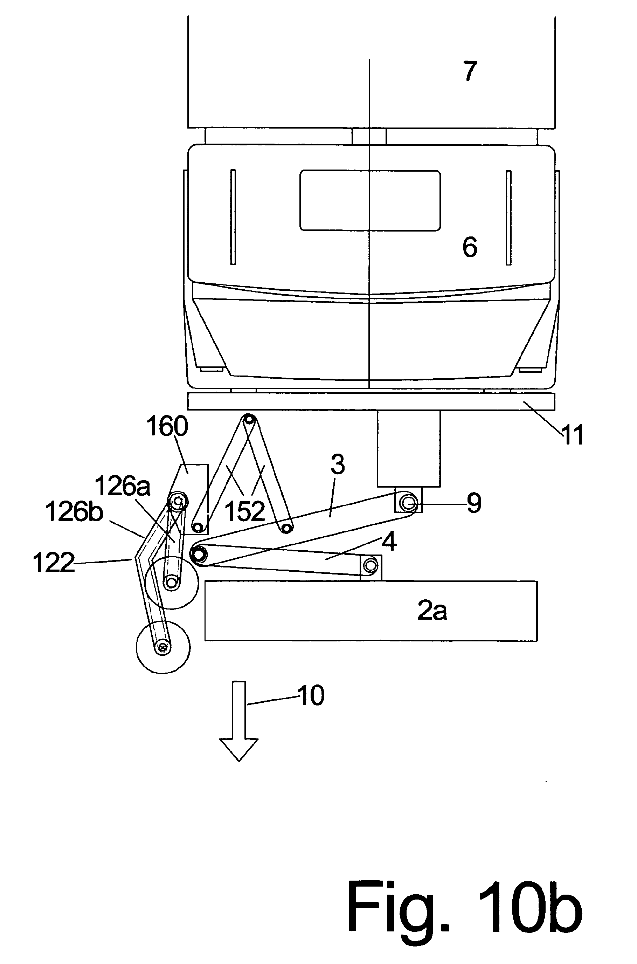

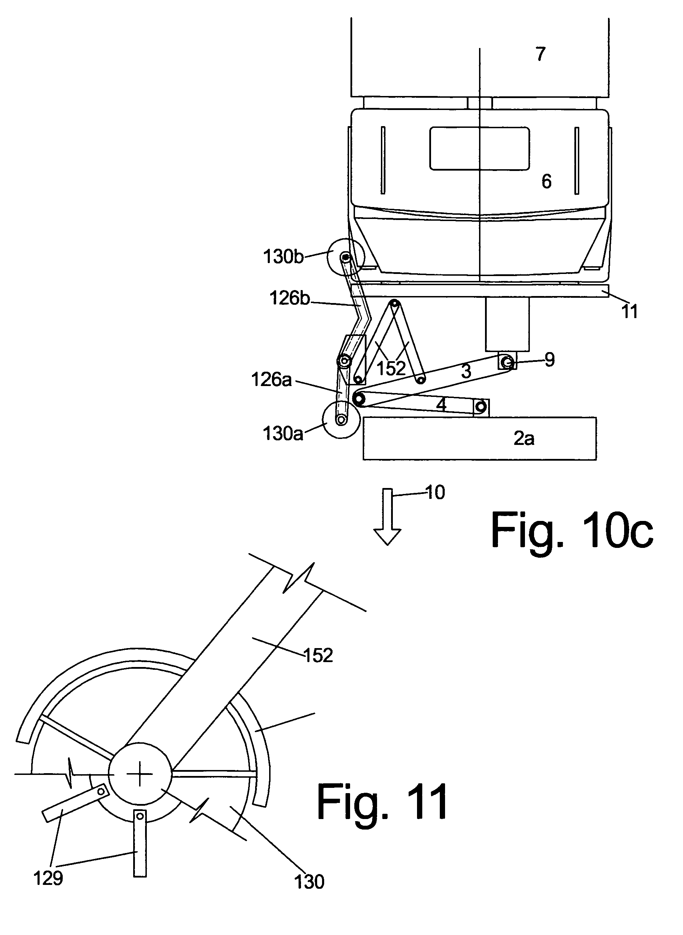

Fig. 10 zeigt neben der normalen Mähstellung des Mähgerätes 1 gemäß Fig. 10a in den Fig. 10b und 10c mögliche Transportstellungen des Randstreifensmähers:
Dabei wird der Freiraum genutzt, der zwischen der Versatzschiene 11 des Frontrahmens 8 und dem demgegenüber weiter vorn liegenden Anlenkpunkt 9 für den Auslegerarm 3 des vorderen Mähkopfes 2a vorhandene Abstand in Fahrtrichtung genutzt:
   In diesem Freiraum hinein wird der Auslegerarm 152 des Pfosten-Freimähers 120 hineingeklappt und insbesondere auch der Grundkörper 160.

Gemäß Fig. 10b befinden sich in dieser Transportstellung die beiden Tragarme 126a, b möglichst nahe gegeneinander bzw. übereinander gelegt und nach vorne gerichtet, um die Gesamtbreite des Mähgerätes 1 möglichst gering zu halten, wobei sich wenigstens eine der Mähvorrichtungen 127a, b seitlich neben dem Mähkopf 2a befindet.

Fig. 10c zeigt eine andere Transportlösung, in der einer der Arme 126 nach hinten und einer nach vorne geklappt ist, so dass die beiden Mähvorrichtungen 127a, b in etwa eine in Fahrtrichtung 10 gerichtete Linie bilden und die nach vorn geklappte Mähvorrichtung teilweise unterhalb der Karosserie des Arbeitsfahrzeuges 7, zumindest unterhalb der Versatzschiene 11, hineinragt.

Vorzugsweise sollte dabei der gekröpfte, äußere Arm 126b der nach hinten weisende Arm sein, was jedoch nur bei übereinander gelagerten Armen 126b möglich ist.

Die Auslegerarme 3 und 152 sind dabei gegenläufig in Querrichtung V-förmig zusammengeklappt, wobei der Knick des Auslegerarms 3 des Mähkopfes 2a zum zu mähenden Randstreifen hin zeigt, der Knick des Auslegerarmes 152 für den Pfosten-Freihmäher 120 dagegen zur Straße hin.

Fig. 11 zeigt in der Aufsicht von oben eine der Mähvorrichtungen 127 im Detail, wobei zu erkennen ist, dass die einzelnen Messer 129, die als Schneidmittel dienen, um vertikale Klappachsen 173 an der rotierenden Mähscheibe angeordnet sind und primär durch die Fliehkraft und ihre eigene Masse in der radial nach außen ragenden Stellung gehalten werden, aber auch durch eine zusätzliche Feder in die radiale Richtung vorgespannt sein können.

Durch Kontakt mit einem stärkeren Hindernis als dem zu mähenden Gras oder Buschwerk klappen die Schneidmittel 129 entgegen ihrer Rotationsrichtung nach hinten weg, wodurch eine Beschädigung dieser Schneidmittel und/oder des Hindernisses vermieden wird, welches ja trotz der über den Schneidmittel liegenden, radial geringfügig größeren Tastscheibe in deren Wirkungsbereich gelangen könnte.

Vor allem durch die Masse der Schneidmittel 129 wird das Mähvermögen (nur Gras, oder auch kleinere Äste/Buschwerk) festgelegt.

In Fahrtrichtung hinter der Mähvorrichtung und koaxial zu deren Mitte ist ein Schleuderschutz 174 über etwa den halben Umfang angeordnet, der sich gemäß Fig. 8a bis unterhalb des Niveaus der Schneidmittel 129 erstreckt.

### BEZUGSZEICHENLISTE

- 1: Randstreifen-Mähgerät
- 2a,b: Mähkopf (innerer/äußerer)
- 3: Auslegerarm
- 4: Auslegerarm
- 5: Steuerung
- 6: Fahrerkabine
- 7: Arbeitsfahrzeug
- 8: Frontrahmen
- 9: Anlenkpunkt
- 10: Fahrtrichtung
- 11: Versatzschiene
- 12: Taststange
- 13: Auslegerarm
- 14: Straße
- 15: Leitplanke
- 16a,b: Mähwelle
- 17: Tragpfosten
- 18: Abstandhalter
- 19: Querrichtung
- 22: Leitpfosten
- 25: Verschiebeschuh
- 120: Pfosten-Freimäher
- 121: Wirkrichtung
- 122: Knick
- 123: Kippachse
- 124: Detektionsmittel
- 125: Luftpolster
- 150: vertikale Achse
- 151: Zwischenwinkel
- 152: Auslegearm
- 154: Zwischenwinkel
- 156: Anschlag
- 157: Taststab
- 158: Leitkurve
- 159: Zahnstange
- 160: Grundkörper
- 161: Ritzel
- 162: Pneumatik- oder Hydraulikzylinder
- 163: Verstellzylinder
- 164: Aufnahmeteil
- 165: Sicherheitszylinder
- 166: Restfläche
- 167: Gleitkufe
- 168: Entlastungszylinder
- 169: Druckspeicher
- 170: Antriebsmotor
- 171: Keilriemen
- 172: Sensor
- 173: Klappachse
- 174: Schleuderschutz
- D: Dicke
- H: Hindernis
- P: Arbeitsdruck
- L: Lücke
- 126: Tragarm
- 127: Mähvorrichtung
- 128: Schwenkvorrichtung
- 129: Schneidmittel
- 130: Tastscheibe
- R: Rest

## Patentansprüche

1. Pfosten-Freimäher (120) zum Tragen an einem Arbeitsfahrzeug (7) für das Freimähen des Bereiches um ein Hindernis, insbesondere einen Pfosten, herum, mit
- zwei Mähvorrichtungen (127a, b), die jeweils um eine aufrechte Achse rotieren und am in Fahrtrichtung vorderen freien Ende jeweils eines Tragarmes (126a, b) angeordnet sind,
- die beiden Tragarme in der normalen Mähstellung vor dem Hindernis V-förmig nach vorne auseinanderstreben,
- wobei die Tragarme (126a, b) um eine aufrechte Achse (150) an einem Grundkörper (160) schwenkbar angeordnet sind zwischen einer normalen Mähstellung ohne Kontakt mit dem Hindernis (H) und wenigstens einer durch das Hindernis (H) ausgelösten verschwenkten Mähstellung,
- wenigstens einem dem Freimäher (120) zugeordneten Erfassungsmittel für das Hindernis (H) und
- wenigstens einer Schwenkvorrichtung zum Verschwenken der Position der Tragarme (126a, b) relativ zum Grundkörper (160),
**dadurch gekennzeichnet, dass**
- zwei Schwenkvorrichtungen (128a, b) vorhanden sind, die jeweils einen der Tragarme (126a, b) unabhängig voneinander beaufschlagen und aktiv verschwenken können, und
- in der normalen Mähstellung die beiden Mähvorrichtungen (127a, b) eine definierte Lücke (L) in Querrichtung (19) zueinander aufweisen, der von dem Erfassungsmittel, insbesondere dem Taststab (157), wenigstens teilweise, insbesondere vollständig abgedeckt wird.

2. Pfosten-Freimäher (120) nach Anspruch 1,
**dadurch gekennzeichnet, dass**
- die Schwenkvorrichtung (128), insbesondere jede der Schwenkvorrichtungen (128a, b), einen fluidbetriebene Kolben-Zylindereinheit, insbesondere einen Pneumatikzylinder (162a, b), insbesondere einen in beide Richtungen beaufschlagbaren Pneumatikzylinder (162a, b), umfasst, und/oder insbesondere
- die im Pneumatikzylinder (128) in einer Ist-Stellung enthaltenen Luftpolster (125a, b) mit definiertem Druck als Feder zum Vorspannen in der jeweiligen Schwenkstellung benutzt werden, und/oder insbesondere
- die Längsbewegung der Kolben-Zylinder-Einheit über Zahnstange (159) und Ritzel (161) in eine Schwenkbewegung der Tragarme (126a, b) umgesetzt wird.

3. Pfosten-Freimäher (120) nach einem der vorhergehenden Ansprüche,
**dadurch gekennzeichnet, dass**
- der Pfostenfreimäher (20) eine Steuerung (5) umfasst, die bei Erfassen eines Hindernisses (H) durch das Erfassungsmittel automatisch eine gesteuerte Schwenkbewegung von wenigsten einem der Tragarme (126a, b) mittels der zugeordneten Schwenkvorrichtung (128a, b), insbesondere beider Tragarme, vollzieht zum Freimähen des Hindernisses (H), und/oder insbesondere
- die gesteuerte automatische Schwenkbewegung eine insbesondere durch Programmieren festgelegte, höchstens von der Geschwindigkeit des Arbeitsfahrzeuges (7) und damit der Relativbewegung des Freimähers (120) zum Hindernis (H) abhängige, Schwenkbewegung ist, und/oder insbesondere
- das Erfassungsmittel ein Taststab (157) ist, der an wenigstens einer der Mähvorrichtungen (127a, b), insbesondere der weiter innen am Arbeitsfahrzeug (7) laufenden Mähvorrichtung (127a), angeordnet ist und von dieser radial abstrebt, insbesondere über die radiale Auskragung deren Schneidmesser (129) hinaus.

4. Pfosten-Freimäher (120) nach einem der vorhergehenden Ansprüche,
**dadurch gekennzeichnet, dass**
- das Erfassungsmittel ein optisches kontaktloses Erfassungsmittel ist, und/oder insbesondere
- das Erfassungsmittel in der Lage ist, die Breite eines Hindernisses (H), betrachtet in Wirkrichtung des Erfassungsmittels, zu ermitteln.

5. Pfosten-Freimäher (120) nach einem der vorhergehenden Ansprüche,
**dadurch gekennzeichnet, dass**
- das Erfassungsmittel seine Wirkrichtung (121) relativ zum Hindernis bei Bewegung des Pfosten-Freimähers (120) relativ zum Hindernis (H) ändert, und/oder insbesondere
- das Erfassungsmittel nicht nur zu Beginn der Erfassung des Hindernisses (H), sondern während der weiteren Erfassung des Hindernisses (H) Signale an die Steuerung (5) gibt, die unmittelbar in die Steuerung der Schwenkbewegung des wenigstens einen Tragarmes (126a, b) eingehen, und/oder insbesondere
- die Tragarme (126) nicht knickbar und insbesondere der Tragarm (126a) zur weiter am Arbeitsfahrzeug (7) laufenden Mähvorrichtung (127a) in der Aufsicht gerade ist und insbesondere der Tragarm (127b) um das Hindernis (H) herum konkav gebogen oder geknickt ist.

6. Pfosten-Freimäher (120) nach einem der vorhergehenden Ansprüche,
**dadurch gekennzeichnet, dass**
- die Mähvorrichtungen (127a, b) durch ihre Tragarme (126a, b) hindurch angetrieben werden, vorzugsweise mittels Riemenantrieb im Inneren des kastenförmigen, geschlossenen Hohlprofiles der Tragarme (126a, b), und/oder insbesondere
- die Tragarme (126a, b) um eine gemeinsame Schwenkachse (150) am Grundkörper (160) verschwenkbar gelagert sind, und/oder insbesondere
- die Tragarme (126a, b) um getrennte Schwenkachsen (150a, b) am Grundkörper (160) schwenkbar angeordnet sind und insbesondere die Schwenkachse (150a) für den weiter innen laufenden Tragarm (126a) vor, insbesondere in Fahrtrichtung (10) versetzt, fluchtend vor der Schwenkachse (150b) des äußeren Tragarmes (126b) angeordnet ist und insbesondere beide Mähvorrichtungen (127a, b) von einem gemeinsamen Antriebsmotor (170) angetrieben werden.

7. Pfosten-Freimäher (120) nach einem der vorhergehenden Ansprüche,
**dadurch gekennzeichnet, dass**
- in der normalen Mähstellung die weiter außen arbeitende Mähvorrichtung (127b) weiter vorn positioniert ist als die innen laufende Mähvorrichtung (127a), insbesondere um die zu erwartende Dicke (D) des Hindernisses (H) gemessen in Fahrtrichtung (10), weiter vorn angeordnet ist, und/oder insbesondere
- die Schwenkachse (150b) des äußeren Tragarmes (126b) relativ zum Rest der Mähvorrichtung, insbesondere relativ zum Grundkörper (160), in Querrichtung (19) verlagerbar, insbesondere gesteuert in Abhängigkeit von der Schwenkbewegung des Tragarmes (126a) verlagerbar ist, und/oder insbesondere
- sich die Tragarme (126a, b) auf gleicher Höhe über Grund am Grundkörper (160) befinden.

8. Pfosten-Freimäher (120) nach einem der vorhergehenden Ansprüche,
**dadurch gekennzeichnet, dass**
- der Knick (122) im äußeren Tragarm (126b) in der hinteren Hälfte, insbesondere im hinteren Drittel der Länge des Tragarmes (126b) angeordnet ist, und/oder insbesondere
- die Tragarme (126a, b) neben der normalen Mähstellung und der Schwenkstellung eine Transportstellung relativ zum Grundkörper (160) einnehmen können zwecks Transport des Freimähers (120) am Arbeitsfahrzeug (7), und in der Transportstellung die beiden Tragarme (126a, b) entweder möglichst eng aneinander geklappt und nach vorne weisend angeordnet sind oder um etwa 180° auseinander geklappt, wobei insbesondere der innere Tragarm (126b) nach vorne und der äußere Tragarm (126a) nach hinten weist, so dass insbesondere die Mähvorrichtungen (127a, b) auf einer etwa in Fahrtrichtung (10) liegenden Linie liegen, und/oder insbesondere
- im Transportzustand der Grundkörper (160) eines vorhandenen Frontmähkopfes in den Zwischenraum zwischen Fahrzeugfrontschiene (11) und den weiter vorn liegenden Anlenkpunkt (9) für den Auslegearm des Haupt-Mähkopfes (2a) hineinverlagerbar ist, insbesondere mittels eines eigenen, insbesondere zweiteiligen, Auslegerarmes (13).

9. Pfosten-Freimäher (120) nach einem der vorhergehenden Ansprüche,
**dadurch gekennzeichnet, dass**
- in der normalen Mähstellung der innere Tragarm (126a) von der Fahrtrichtung (10) nur um einen einstellbaren Winkel, insbesondere zwischen 0° und 30°, nach quer außen ragt, und/oder insbesondere
- der Grundkörper (160) um eine eine horizontale Komponente der Fahrtrichtung (10) aufweisende; Kippachse (123) verschwenkbar, insbesondere gesteuert verschwenkbar, ist, und/oder insbesondere
- der Freimäher (120), insbesondere eine seiner Mähvorrichtungen (127a, b), insbesondere die weiter außen laufende Mähvorrichtung (127b), ein Detektionsmittel (124), insbesondere ein Tastmittel zum Abtasten des Untergrundes aufweist, mit dessen Hilfe die Mähvorrichtung (127) in ihrer Höhenlage und/oder in ihrer Kippstellung, insbesondere um +/- 30° Kippwinkel, gegenüber dem Untergrund angepasst wird.

10. Pfosten-Freimäher (120) nach einem der vorhergehenden Ansprüche,
**dadurch gekennzeichnet, dass**
- der Durchmesser der Mähvorrichtungen (127) so dimensioniert ist, dass deren radialer Überstand über die Breite der Tragarme (126) hinaus etwa der Hälfte der zu erwartenden Dicke (D) des Hindernisses (H) entspricht, und/oder insbesondere
- die rotierenden Schneidmittel (129) gegenüber dem rotierenden Grundkörper entgegen der Rotationsrichtung einklappbar sind um eine Klappachse parallel zur Rotationsachse der Mähvorrichtung, und/oder insbesondere
- die Schwenkarme außer den Endstellungen ihrer Fluidzylinder, insbesondere Pneumatikzylinder, keine Endanschläge für ihre Schwenkanstellungen relativ zum Tragmittel aufweisen.

11. Verfahren zum Freimähen eines Hindernisses (H), insbesondere eines Pfostens, mittels
- eines in Fahrtrichtung (10) im Wesentlichen gerade gegen das Hindernis (H) herangeführten Pfosten-Freimähers (120) mit zwei Mähvorrichtungen,
- die an den vorderen Enden der nach vorne auseinander laufenden beiden Tragarmen (126a, b) angeordnet sind,
- die Tragarme (126a, b) um aufrechte Schwenkachsen (150a, b) an dem Freimäher-Grundkörper verschwenkbar sind,
**dadurch gekennzeichnet, dass**
- nach Detektieren des Hindernisses (H) durch ein Erfassungsmittel beide Mähvorrichtungen (127a, b), eine gesteuerte Schwenkbewegung um unterschiedliche Umfangsbereiche des Hindernisses (H) herum vollziehen,
- der Freimäher (120) so gegen das Hindernis (H) geführt wird, dass es auf die in Fahrtrichtung (10) betrachtete Lücke (L) zwischen den beiden Mähvorrichtungen (127a, b) trifft, und
- die innen laufende Mähvorrichtung (127a) erst an das Hindernis (H) herangeklappt wird und dieses kontaktiert nach Erfassen des Hindernisses (H) durch das Erfassungsmittel.

12. Verfahren nach Anspruch 11,
**dadurch gekennzeichnet, dass**
- die gesteuerte Schwenkbewegung der Mähvorrichtungen (127) um das Hindernis (H) herum unter teilweiser Kompensation der Anpresskräfte der beiden Mähvorrichtungen (127a, b) gegen das Hindernis durchgeführt wird,
- dieses kontaktiert erst wenn die Mitte der Mähvorrichtung (127a) in Fahrtrichtung (10) das Hindernis erreicht hat, und/oder insbesondere
- der Arbeitsdruck (P) in der wenigstens einen Kammer des Fluidzylinders (162) verändert wird in Abhängigkeit von der Schwenkstellung des jeweiligen Tragarmes (126).

13. Verfahren nach einem der vorhergehenden Verfahrensansprüche,
**dadurch gekennzeichnet, dass**
- die Soll-Winkelstellung der beiden Tragarme (126a, b) zueinander in der normalen Mähstellung und/oder in der gesteuerten Schwenkbewegung verändert wird in Abhängigkeit der vom Erfassungsmittel ermittelten Dicke des Hindernisses (H), insbesondere der mit ändernder Wirkrichtung des Erfassungsmittels sich ändernden Dicke (D) des Hindernisses, und/oder insbesondere
- die Schwenkachse (150b) der äußeren Mähvorrichtung (127b) in Querrichtung (19) gesteuert verlagert wird, insbesondere während der Schwenkbewegung des inneren Tragarmes (126a), und/oder insbesondere
- die beiden Arbeitsräume beidseits der Kolben in den Fluidzylindern für die Bewegung der Schwenkarme gleichzeitig mit dem Felgendruck, insbesondere dem Systemdruck, beaufschlagbar sind zum Fixieren des Kolbens in der momentanen Stellung.

## Claims

1. A post edge mower (120) configured to be supported at a utility vehicle (7) for mowing an area about an obstacle, in particular a post, comprising:
- two mowing devices (127a, b), respectively rotating about a vertical axis and disposed at a forward free end in driving direction of one respective support arm (126a, b),
- wherein the two support arms extend away from one another in a forward oriented V shape in the normal mowing position in front of the obstacle,
- wherein the support arms (126a, b) are pivotably supported about a vertical axis (150) at a base body (160) between a normal mowing position without contact with the obstacle (H) and at least one pivoted mowing position initiated by the obstacle (H),
- at least one detection device for the obstacle (H), wherein the detection device is associated with the edge mower (120); and
- at least one pivot device for pivoting the position of the support arms (126a, b) relative to the base body (160), wherein
- two pivot devices (128a, b) are provided, which can respectively load and actively pivot one of the support arms (126a, b) independently from one another; and
- the two mowing devices (127a, b) comprise a defined gap (L) in transversal direction (19) between one another in the normal mowing position, wherein the gap is at least partially, in particular completely covered by the detection device, in particular the sensing rod (157).

2. The post edge mower (120) according to claim 1, wherein
- the pivoting device (128), in particular each of the pivoting devices (128a, b) comprises a fluid operated piston-cylinder unit, in particular a pneumatic cylinder (162a, b), in particular a pneumatic cylinder (162a, b) which can be loaded in both directions, and/or in particular
- the air cushions (125a, b), which are included in the pneumatic cylinder (162a, b) in an actual position, are being used at a defined pressure as a spring for preloading in the respective pivot position, and/or in particular
- the longitudinal movement of the piston-cylinder-unit is transposed into a pivoting movement of the support arms (126a, b) through a rack (159) and a pinion (161)

3. The post edge mower (120) according to one of the preceding claims, wherein
- the post edge mower (120) includes a control (5), which automatically performs a controlled pivoting movement of at least one of the support arms (126a, b) through the associated pivot device (128a, b), in particular of both support arms, when detecting an obstacle (H) through the detection device in order to mow around the obstacle (H) and/or in particular
- the controlled automatic pivoting movement is in particular a pivoting movement which is defined through programming, which is at the most a function of the velocity of the utility vehicle (7) and thus a function of the relative movement of the edge mower (120) relative to the obstacle (H) and/or in particular,
- the detection device is a sensing rod (157) which is disposed at least at one of the mowing devices (127a, b), in particular at the mowing device (127a) disposed further on the inside of the utility vehicle (7), in particular the sensing rod protrudes in radial direction from the mowing device, in particular it protrudes beyond the radial extension of the cutting blades (129)

4. The post edge mower (120) according to one of the preceding claims, wherein
- the detection device is an optical detection device and/or in particular
- the detection device is configured to determine the width of the obstacle (H) viewed in the effective direction of the detection device

5. The post edge mower (120) according to one of the preceding claims, wherein
- the detection device changes its effective direction relative to the obstacle when the post mower (120) moves relative to the obstacle (H) and/or in particular
- the detection device provides signals to the control (5) not only at the beginning of the detection of the obstacle (H), but also during the further detection of the obstacle (H), wherein the signals are provided directly to the control of the pivoting movement of the at least one support arm (126a, b) and/or in particular
- the support arms (126) are not foldable and in particular the support arm (126 a) for the mowing device (127a) which runs closer to the utility vehicle (7) is straight in top view and in particular the support arm (127b) is bent about the obstacle (H) in a concave manner or it is kinked around the obstacle

6. The post edge mower (120) according to one of the preceding claims, wherein
- the mowing devices (127a, b) are driven through their support arms (126a, b), preferably through a belt drive in the interiors of the box-shaped closed hollow profiles of the support arms (126a, b) and/or in particular
- the support arms (126a, b) are pivotably supported about a common pivot axis (150) at the base body (160) and/or in particular
- the support arms (126a, b) are pivotably supported about separate pivot axes (150a, b) at the base body (160) and in particular the pivot axis (150a) for the support arm (126a), which runs further on the inside, is disposed in front of the pivot axis (150b) of the outer support arm (126b), in particular offset thereto in a driving direction (10) and is aligned with the pivot axis (150b) and in particular both mowing devices (127a, b) are driven by a common drive motor (170).

7. The post edge mower (120) according to one of the preceding claims, wherein
- in the normal mowing position, the mowing device operating further on the outside is positioned further forward than the mowing device (127a) running on the inside, in particular by the expected thickness (D) of the obstacle (H) measured in driving direction and/or in particular
- the pivot axis (150b) of the outer support arm (126b) is displaceable in transversal direction (19) relative to the rest of the mowing device, in particular relative to the base body (160), in particular as a function of the pivoting movement of the support arm (126) and/or in particular
- the support arms (126a, b) are disposed at the same elevation above ground at the base body (160).

8. The post edge mower (120) according to one of the preceding claims, wherein
- the kink (122) in the outer support arm (126) is disposed in the rear half, in particular in the rear third of the length of the support arm (126b), and/or in particular
- the support arms (126a, b) can assume a transport position relative to the base body (160) for the purpose of the transport of the post edge mower (120) at the utility vehicle (7) in addition to the normal mowing position and the pivoted position, and the two support arms (126a, b) are either arranged folded towards each other as tightly as possible and oriented forward in the transport position, or they are arranged folded apart by an angle of approximately 180°, wherein particularly the inner support arm (126b) is oriented in forward direction and the outer support arm (126a) is oriented in backward direction, so that in particular the mowing devices (127a, b) are disposed approximately on a line in the driving direction and/or in particular
- the base body (160) of an existing front cutting head is displaceable in transport condition into the gap between the vehicle front rail (11) and the linking point (9) positioned further forward for the extension arm of the main cutting head (2a), in particular by means of a proprietary, particularly two-part extension arm (13).

9. The post edge mower (120) according to one of the preceding claims, wherein
- the inner support arm (126a) protrudes in the normal mowing position in transversal outward direction from the driving direction (10) only by an adjustable angle, in particular between 0° and 30° and/or in particular
- the base body (160) is pivotable about a pivot axis (123) comprising a horizontal component of the driving direction (10), in particular pivotable in a controlled manner, and/or in particular
- the post edge mower (120), in particular one of its mowing devices (127a, b), in particular the mowing device (127b) running further on the outside, comprises a detection device (124), in particular a sensing device for scanning the ground, wherein an elevation and/or a tilt position of the mowing device (127) is adjusted relative to the ground, in particular by a +/- 30° tilting angle.

10. The post edge mower (120) according to one of the preceding claims, wherein
- the diameter of the mowing device (127) is sized, so that its radial protrusion beyond the width of the support arms (126) corresponds approximately to half the expected thickness (D) of the obstacle (H) and/or in particular
- the rotating cutting devices (129) can be folded in relative to the rotating base body opposite to the rotation direction, wherein the folding occurs about a folding axis parallel to the rotation axis of the mowing device and/or in particular
- the pivot arms comprise no end stops for their pivot positions relative to the support device besides the end position of their fluid cylinders, in particular pneumatic cylinders

11. A method for edge mowing about an obstacle (H), in particular a post using the following:
- a post edge mower (120) with two mowing devices, which is being moved essentially straight against the obstacle (H) in driving direction (10),
- wherein the mowing devices are disposed at the front ends of the two support arms (126a, b) extending away from one another in forward direction,
- wherein the support arms (126a, b) are pivotable about vertical pivot axes (150a, b) at the base body of the post edge mower;
- wherein both mowing devices (127a, b) perform a controlled pivoting movement about various circumferential portions of the obstacle (H) after the obstacle (H) is detected by a detecting device;
- wherein the post edge mower (120) is driven towards the obstacle (H), so that it strikes the gap (L) in driving direction (10) between the two mowing devices (127a, b) and
- the mowing device (127a) that is running on the inside is first pivoted towards obstacle (H) and contacts obstacle (H) after the obstacle is detected through the detection device.

12. The method according to claim 11, wherein
- the controlled pivoting movement of the mowing devices (127) about the obstacle (H) is performed under partial compensation of the contact forces of the two mowing devices (127a, b) relative to the obstacle, wherein
- the obstacle contacts the mowing device (127) initially when the center of the mowing device in driving direction (10) has reached the obstacle, and/or in particular
- the operating pressure (P) in at least one chamber of the fluid cylinder (162) is changed as a function of the pivot position of the respective support arm (126).

13. The method according to one of the preceding method claims, wherein
- the target angular position of the two support arms (126a, b) relative to one another is changed in the normal mowing position and/or during the controlled pivot movement, wherein the change occurs as a function of the thickness of the obstacle (H) determined by the detection device, in particular as a function of the thickness (D) of the obstacle which changes with a changing effective direction of the detection device, and/or in particular
- the pivot axis (150b) of the outer mowing device (127b) is displaced in transversal direction (19) in a controlled manner, in particular during the pivoting movement of the inner support arm (126a), and/or in particular
- the two operating cavities on both sides of the pistons in the fluid cylinders for the movement of the pivot arms can be simultaneously loaded with the rim pressure, in particular the system pressure in order to fixate the piston in a present position.

## Revendications

1. Faucheuse contournante (120) destinée à être portée sur un véhicule de travail (7) pour faucher la zone autour d'un obstacle, en particulier un poteau, comprenant
- deux dispositifs de fauche (127a, b) qui tournent respectivement autour d'un axe vertical et qui sont disposés sur l'extrémité libre avant dans la direction de déplacement, d'un bras porteur (126a, b),
- les deux bras porteurs s'écartant en forme de V vers l'avant dans la position normale de fauche devant l'obstacle,
- les bras porteurs (126a, b) étant disposés autour d'un axe vertical (150) sur un corps de base (60) de manière pivotante entre une position normale de fauche sans contact avec l'obstacle (H) et au moins une position de fauche basculée déclenchée par l'obstacle (H),
- au moins un moyen de détection associé à la faucheuse (120) pour l'obstacle (H) et
- au moins un dispositif de pivotement pour le pivotement de la position des bras porteurs (126a, b) par rapport au corps de base (160),
**caractérisée en ce que**
- il est prévu deux dispositifs de pivotement (128a, b) qui peuvent basculer activement et faire impact respectivement sur l'un des bras porteurs (126a, b) indépendamment l'un de l'autre et
- dans la position normale de fauche, les deux dispositifs de fauche (127a, b) présentent dans la direction transversale (19) l'un par rapport à l'autre un intervalle défini (L) qui est recouvert au moins partiellement en particulier entièrement par le moyen de détection en particulier par la barre de palpage (157).

2. Faucheuse contournante (120) selon la revendication 1, **caractérisée en ce que**
- le dispositif de pivotement (128) en particulier chacun des dispositifs de pivotement (128a, b) comprend une unité de vérin à piston actionnée par un fluide, en particulier un vérin pneumatique (162a, b) en particulier un vérin pneumatique (162a, b) alimenté dans les deux directions et/ou en particulier **en ce que**
- les coussins d'air (125a, b) contenus dans le vérin pneumatique (128) dans une position théorique, sont utilisés avec une pression définie comme ressort pour la précontrainte dans la position de pivotement respective et/ou en particulier **en ce que**
- le mouvement longitudinal de l'unité de vérin à piston est transformé en un mouvement de pivotement des bras supports (126a, b) par une crémaillère (159) et un pignon (161).

3. Faucheuse contournante (120) selon l'une des revendications précédentes, **caractérisée en ce que**
- la faucheuse contournante (120) comprend une commande (5) qui, lors de la détection d'un obstacle (H) par le moyen de détection, accomplit automatiquement un mouvement de pivotement commandé d'au moins un des bras porteurs (126a, b) au moyen du dispositif de pivotement associé (128a, b), en particulier des deux bras supports, pour une fauche autour de l'obstacle (H), et/ou en particulier,
- le mouvement de pivotement automatique commandé est un mouvement de pivotement défini en particulier par programmation, dépendant au plus de la vitesse du véhicule de travail (7) et ainsi du mouvement relatif de la faucheuse (120) par rapport à l'obstacle (H) et/ou en particulier, **en ce que**
- le moyen de détection est une barre de palpage (157) qui est disposée au moins sur l'un des dispositifs de fauche (127a, b) en particulier sur le dispositif de fauche (127a) tournant plus à l'intérieur sur le véhicule de travail (7) et qui fait saillie radialement du dispositif de fauche, en particulier au delà du surplomb radial des lames de coupe (129) de ce dernier.

4. Faucheuse contournante (120) selon l'une des revendications précédentes, **caractérisée en ce que**
- le moyen de détection est un moyen de détection optique sans contact et/ou en particulier, **en ce que**
- le moyen de détection est en mesure de déterminer la largeur de l'obstacle (H), observée dans la direction d'action du moyen de détection.

5. Faucheuse contournante (120) selon l'une des revendications précédentes, **caractérisée en ce que**
- le moyen de détection modifie sa direction d'action (121) par rapport à l'obstacle lors du déplacement de la faucheuse contournante (120) par rapport à l'obstacle (H), et/ou en particulier, **en ce que**
- le moyen de détection envoie des signaux à la commande (5) non seulement au début de la détection de l'obstacle (H), mais également pendant la poursuite de la détection de l'obstacle (H), signaux qui sont traités directement dans la commande du mouvement de pivotement d'au moins un bras porteur (126a, b), et/ou en particulier, **en ce que**
- les bras porteurs (126) ne peuvent pas subir de flambage et en particulier le bras porteur (126a) est droit en vue de dessus par rapport au dispositif de fauche (127a) tournant plus loin sur le véhicule de travail (7) et en particulier le bras porteur (127b) est courbé ou coudé de manière concave autour de l'obstacle (H)

6. Faucheuse contournante (120) selon l'une des revendications précédentes, **caractérisée en ce que**
- les dispositifs de fauche (127a, b) traversent leurs bras porteurs (126a, b), entraînés de préférence au moyen d'un entraînement par courroie à l'intérieur du profilé creux fermé en forme de caisson des bras porteurs (126a, b), et/ou en particulier, **en ce que**
- les bras porteurs (126a, b) sont logés pivotants autour d'un axe commun (150) sur le corps de base (160), et/ou en particulier, **en ce que**
- les bras porteurs (126a, b) sont disposés de manière pivotante autour d'axes de pivotement séparés (150a, b) sur le corps de base (160) et en particulier pour le bras porteur (126a) tournant plus loin à l'intérieur, l'axe de pivotement (150a) est disposé aligné à l'axe de pivotement (150b) du bras porteur externe (126b), en particulier décalé dans la direction de déplacement (10), et en particulier les deux dispositifs de fauche (127a, b) sont entraînés par un moteur d'entraînement commun (170).

7. Faucheuse contournante (120) selon l'une des revendications précédentes, **caractérisée en ce que**
- dans la position normale de fauche, le dispositif de fauche (127b) travaillant plus loin vers l'extérieur est positionné plus loin vers l'avant que le dispositif fonctionnant à l'intérieur (127a), en particulier il est disposé plus vers l'avant de l'équivalent de l'épaisseur (D) attendue de l'obstacle (H) mesurée dans la direction de déplacement (10), et/ou en particulier, **en ce que**
- l'axe de pivotement (150b) du bras porteur externe (126b) peut être déplacé par rapport au reste du dispositif de fauche, en particulier par rapport au corps de base (160) dans la direction transversale (19), en particulier être commandé en fonction du mouvement de pivotement du bras porteur (126a) et/ou en particulier **en ce que**
- les bras porteurs (126a, b) se trouvent à la même hauteur au-dessus du sol sur le corps de base (160).

8. Faucheuse contournante (120) selon l'une des revendications précédentes, **caractérisée en ce que**
- le coude (122) dans le bras porteur externe (126b) est disposé dans la moitié arrière, en particulier dans le tiers arrière de la longueur du bras porteur (126b), et/ou en particulier, **en ce qu'**
- outre la position normale de fauche et la position de pivotement, les bras porteurs (126a, b) prennent une position de transport par rapport au corps de base (160), en vue du transport de la faucheuse (120) sur le véhicule de travail (7), et dans la position de transport, les deux bras porteurs (126a, b) soit sont repliés l'un contre l'autre le plus possible et sont disposés dirigés vers l'avant, soit sont dépliés d'un angle de 180°, en particulier le bras porteur interne (126b) étant dirigé vers l'avant et le bras porteur externe (126a) vers l'arrière, de sorte qu'en particulier les dispositifs de fauche (127a, b) se trouvent sur une ligne se trouvant dans la direction de déplacement (10), et/ou en particulier, **en ce que**
- dans l'état de transport, le corps de base (160) d'une tête de fauche frontale existante peut être déplacé dans l'espace entre le rail avant de véhicule ((11) et le point d'articulation (9) plus à l'avant, pour le bras de portée de la tête principale de fauche (2a), en particulier au moyen d'un propre bras de portée (13), en particulier en deux parties.

9. Faucheuse contournante (120) selon l'une des revendications précédentes, **caractérisée en ce que**
- dans la position normale de fauche, le bras porteur (126a) ne dépasse transversalement vers l'extérieur, de la direction de déplacement (10) que d'un angle réglable, en particulier entre 0° et 30°, et/ou en particulier, **en ce que**
- le corps de base (160) est pivotant en particulier de manière commandée autour d'un axe de bascule (123) présentant une composante horizontale de la direction de déplacement (10), et/ou en particulier, **en ce que**
- la faucheuse contournante (120) en particulier l'un de ses dispositifs de fauches (127a, b), en particulier le dispositif de fauche (127b) tournant plus loin à l'extérieur présente un moyen de détection (124), en particulier un moyen pour palper le sol, à l'aide duquel le dispositif de fauche (127) est adapté par rapport au sol dans sa position en hauteur et/ou dans sa position de bascule, en particulier selon un angle de bascule de +/- 30°.

10. Faucheuse contournante (120) selon l'une des revendications précédentes, **caractérisée en ce que**
- le diamètre des dispositifs de fauche (127) est dimensionné de sorte que leur avancée radiale au delà de la largeur des bras porteurs (126) correspond approximativement à la moitié de l'épaisseur attendue (D) de l'obstacle (H), et/ou en particulier, **en ce que**
- les moyens de coupe rotatifs (129) sont repliables à l'opposé de la direction de rotation par rapport au corps de base autour d'un axe de repli parallèlement à l'axe de rotation du dispositif de fauche, et/ou en particulier, **en ce qu'**
- outre les positions finales de leurs vérins à fluide, en particulier les vérins pneumatiques, les bras pivotants ne présentent aucune butée d'extrémité pour leurs positions de pivotement par rapport au moyen porteur.

11. Procédé pour faucher un obstacle (H) par contournement, en particulier un poteau, au moyen
- d'une faucheuse contournante (120) amenée dans la direction de déplacement (10) en ligne droite contre l'obstacle (H) avec deux dispositifs de fauche,
- qui sont disposés sur les extrémités avant des deux bras porteurs (126a, b) s'écartant l'un de l'autre vers l'avant,
- les bras porteurs (126a, b) étant pivotants autour d'axes verticaux pivotants (150a, b) sur le corps de base de la faucheuse contournante,
**caractérisé en ce qu'**
- après la détection de l'obstacle (H) par un moyen de détection, les deux dispositifs de fauche (127a, b) exécutent un mouvement de pivotement commandé autour de zones périphériques différentes de l'obstacle (H),
- la faucheuse (120) est guidée contre l'obstacle (H) de sorte qu'elle parvient à l'intervalle (L) observé dans la direction de déplacement (10) entre les deux dispositifs de fauche (127a, b), et **en ce que**
- le dispositif de fauche (127a) fonctionnant à l'intérieur n'est alors replié contre l'obstacle (H) et n'entre en contact avec ce dernier qu'après la détection de l'obstacle (H) par le moyen de détection.

12. Procédé selon la revendication 11, **caractérisé en ce que**
- le mouvement de pivotement commandé des dispositifs de fauche (127) autour de l'obstacle (H) est exécuté contre l'obstacle sous compensation partielle des forces de compression des deux dispositifs de fauche (127a, b),
- l'entrée en contact avec l'obstacle ne se produit que quand le milieu du dispositif de fauche (127a) a atteint l'obstacle dans la direction de déplacement (10), et/ou en particulier, **en ce que**
- la pression de travail (P) est modifiée dans une moins une chambre du vérin à fluide (162) en fonction de la position de pivotement du bras porteur respectif (126).

13. Procédé selon l'une des revendications de procédé précédentes, **caractérisé en ce que**
- la position angulaire théorique des deux bras porteurs (126a, b) entre eux est modifiée dans la position de fauche normale et/ou dans le mouvement de pivotement commandé en fonction de l'épaisseur de l'obstacle (H) déterminée par le moyen de détection, en particulier de l'épaisseur (D) de l'obstacle se modifiant avec la direction d'action en évolution du moyen de détection, et/ou en particulier, **en ce que**
- l'axe de pivotement (150b) du dispositif externe de fauche (127b) est déplacé de manière commandée dans la direction transversale (19), en particulier pendant le mouvement de pivotement du bras porteur interne (126a), et/ou en particulier,
- les deux espaces de travail de part et d'autres des pistons dans les vérins à fluide pour le mouvement des bras peuvent subir en même temps la pression, en particulier la pression de système pour la fixation du piston dans la position momentanée.
